(19) Europäisches Patentamt
European Patent Office
Office européen des brevets

(11) **EP 4 166 907 A1**

(12) **DEMANDE DE BREVET EUROPEEN**

(43) Date de publication:
**19.04.2023 Bulletin 2023/16**

(21) Numéro de dépôt: **22202262.6**

(22) Date de dépôt: **18.10.2022**

(51) Classification Internationale des Brevets (IPC):
**G01C 21/20** (2006.01)   **G01C 23/00** (2006.01)
**G08G 5/00** (2006.01)

(52) Classification Coopérative des Brevets (CPC):
**G01C 21/20; G01C 23/005; G08G 5/0021;
G08G 5/0034; G08G 5/0091**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité: **18.10.2021 FR 2111028**

(71) Demandeur: **Dassault Aviation
75008 Paris (FR)**

(72) Inventeurs:
• **URIEN, Benoît
92214 SAINT CLOUD (FR)**
• **GRIMALD, Cyrille
92214 SAINT CLOUD (FR)**

(74) Mandataire: **Lavoix
2, place d'Estienne d'Orves
75441 Paris Cedex 09 (FR)**

(54) **SYSTÈME DE CALCUL DE MISSION D'UN AÉRONEF INDIQUANT UN RISQUE DE PERTE D OPTIMALITÉ DE LA TRAJECTOIRE RÉELLEMENT SUIVIE PAR L AÉRONEF ET PROCÉDÉ ASSOCIÉ**

(57)      Le système comprend un premier module de calcul de trajectoires, propre à calculer une trajectoire optimale de mission (64A) entre un point géographique d'origine (18) et un point géographique de destination (20)

Le premier module de calcul (est propre à calculer une pluralité de courbes d'iso-déplacement depuis le point géographique d'origine (18) vers le point géographique de destination (20)

Le système comporte un module de détermination d'un niveau de risque de perte d'optimalité de la trajectoire réellement suivie par l'aéronef, associé à une modification de trajectoire de l'aéronef par rapport à la trajectoire calculée, le système comporptant un gestionnaire d'affichage propre à afficher sur un afficheur, en complément de la trajectoire calculée (64A), un indicateur (NR) du niveau de risque déterminé.

FIG.6

EP 4 166 907 A1

## Description

La présente invention concerne un système de calcul de mission d'un aéronef comportant un moteur de calcul de trajectoire de l'aéronef lors de la mission, le moteur de calcul comprenant :

- un premier module de calcul de trajectoires, propre à calculer une trajectoire optimale de mission entre un point géographique d'origine et un point géographique de destination, en fonction de performances avion, de spécifications opérationnelles de mission et d'un contexte météorologique, de préférence évolutif, dans un volume de mission entre le point géographique d'origine et le point géographique de destination ;
  le premier module de calcul de trajectoire étant propre à calculer une pluralité de courbes d'iso-déplacement depuis le point géographique d'origine vers le point géographique de destination, et à calculer la trajectoire à partir de points situés sur les courbes d'iso-déplacement ;
- un afficheur, et un gestionnaire d'affichage sur l'afficheur, propre à afficher la trajectoire calculée sur l'afficheur.

L'invention s'applique aux aéronefs utilisés dans l'aviation civile, en particulier dans l'aviation d'affaires.

Un tel système de calcul est notamment destiné à être intégré dans un cockpit, en parallèle d'un système de conduite de vol (« Flight Management System » ou « FMS » en anglais), pour permettre à l'équipage de déterminer des trajectoires de mission.

En variante, le système de calcul est propre à être intégré dans un système de planification de mission non embarqué, par exemple dans une infrastructure aéroportuaire d'établissement de trajectoire d'aéronef, dans un bagage de vol électronique (« Electronic Flight Bag » ou « EFB »), et/ou dans un dispositif électronique portable (par exemple une tablette), ou dans un ordinateur de type PC ou un serveur sol.

Le système de calcul est adapté pour déterminer une trajectoire complète de l'aéronef dans le plan horizontal et dans le plan vertical sur plusieurs niveaux de vol entre un premier point géographique d'origine et un deuxième point géographique de destination. La mission comprend une ou plusieurs étapes.

La préparation et la définition d'une mission d'aéronef entre un premier point géographique et un deuxième point géographique est une tâche consommatrice en temps. Elle nécessite notamment de déterminer la route que va suivre l'aéronef, le profil de vol associé, le chargement en passagers, en fret et en carburant et le calcul de performances basses vitesses, ainsi que la vérification du domaine de vol de l'aéronef.

Cette définition est effectuée en fonction d'un contexte de mission incluant la météorologie, les routes aériennes à emprunter, la connectivité avec des systèmes de communication par satellite et d'un contexte avion qui inclut la configuration et le type d'aéronef utilisé, ainsi que son état de fonctionnement.

Généralement, dans l'aviation civile, les compagnies aériennes et/ou des fournisseurs externes disposent de systèmes de calcul permettant de fournir un plan de vol et des performances aéronef attendues, par exemple une quantité de carburant requise.

Dans l'aviation d'affaires, les contraintes pesant sur l'équipage sont importantes et spécifiques. Les clients demandent parfois à l'équipage de respecter des critères de mission plus stricts, par exemple en matière de confort du passager pendant le vol, de possibilité de se connecter à des systèmes de transmission par satellite, de masse offerte par l'avion etc.

De plus, les conditions de mission, notamment les horaires de décollage, sont sujets à changement et la destination peut changer rapidement en fonction des besoins propres des passagers.

Dans ce cadre, les systèmes de fournitures de plans de vol existants ne donnent pas entière satisfaction.

En particulier, ces systèmes sont conçus pour fonctionner sur une somme de critères d'entrée (vitesse, niveau de vol, nombre de passagers...) auquel correspondra une seule solution de navigation. Il est donc fréquemment nécessaire d'effectuer plusieurs itérations pour ajuster les hypothèses de mission.

Les résultats obtenus par les systèmes de fournisseurs de plan de vol sont en outre généralement incomplets en ce qui concerne les critères requis pour effectuer la mission, notamment dans la gestion des critères clients, du contexte avion et des performances.

Par conséquent, les solutions de trajectoires proposées par le fournisseur ne sont pas satisfaisantes pour le client et/ou résultent en un temps de vol non optimal et/ou en une consommation en carburant augmentée.

Pour pallier ces problèmes, EP3715786 propose un système de calcul de mission du type précité permettant d'obtenir des trajectoires optimisées de manière très flexible pour l'utilisateur, en respectant les spécifications de mission, et en tenant compte des phénomènes météorologiques.

Un tel système peut encore être amélioré. En effet, le système de calcul de mission étant prédictif, il est possible que dans certains cas, les phénomènes météorologiques ou d'autres contraintes de mission évoluent au cours de la mission, ou ne soit pas exactement conforme à la prédiction.

Par ailleurs, lors de l'exécution de la mission, l'utilisateur peut être contraint de dévier de la trajectoire optimale définie initialement, pour des raisons de trafic aérien, de météorologie, ou pour d'autres raisons.

L'utilisateur du système de calcul de mission n'est donc pas certain qu'il pourra suivre avec une grande précision la trajectoire calculée par le système de calcul de mission sur toute la durée de la mission. L'équipage peut être contraint, dans certains, cas à reconfigurer latéralement ou/et verticalement la trajectoire, sans savoir a priori quelle sera l'influence de cette reconfiguration sur la conduite de la mission.

Un but de l'invention est de disposer d'un système de calcul de mission, qui permette d'évaluer la robustesse d'une trajectoire optimisée, vis-à-vis des modifications éventuelles de la trajectoire, compte tenu notamment du contexte météorologique ou des spécifications opérationnelles de mission.

A cet effet, l'invention a pour objet un système de calcul de type précité, caractérisé en ce que le moteur de calcul comporte un module de détermination d'un niveau de risque de perte d'optimalité de la trajectoire réellement suivie par l'aéronef, associé à une modification de trajectoire de l'aéronef par rapport à la trajectoire calculée, le gestionnaire d'affichage étant propre à afficher sur l'afficheur, en complément de la trajectoire calculée, un indicateur du niveau de risque déterminé..

Le système de calcul selon l'invention peut comprendre une ou plusieurs des caractéristiques suivantes, prises isolément ou suivant toute combinaison techniquement possible :

- le niveau de risque est déterminé pour une pluralité de points de la trajectoire calculée, le gestionnaire d'affichage étant propre à afficher un indicateur de niveau de risque correspondant à plusieurs points de la trajectoire calculée ;
- le module de détermination du niveau de risque est propre à déterminer une chaussette autour de la trajectoire calculée, la chaussette contenant la trajectoire calculée, le niveau de risque étant donné par la distance entre la trajectoire calculée et les bords de la chaussette, le gestionnaire d'affichage étant propre à afficher un indicateur de niveau de risque formé par au moins les bords de la chaussette ;
- le module de détermination du niveau de risque est propre à déterminer la chaussette en projection dans un plan horizontal, le niveau de risque étant donné par la distance transversale entre la trajectoire calculée et les bords latéraux de la chaussette ;
- le module de détermination du niveau de risque est propre à déterminer la chaussette en projection dans un plan vertical, le niveau de risque étant défini par la distance entre la trajectoire et les bords supérieur et inférieur de la chaussette ;
- le module de détermination du niveau de risque est propre à déterminer le niveau de risque en calculant, à partir de la trajectoire calculée, des courbes d'iso-déplacement inverses depuis le point géographique de destination vers le point géographique d'origine, puis en déterminant l'intersection entre au moins une courbe d'iso-déplacement et au moins une courbe d'iso-déplacement inverse ;
- lorsque la courbe d'iso-déplacement contenant un point de la trajectoire calculée est obtenue après un nombre N1 d'incréments de déplacement, la courbe d'iso-déplacement inverse utilisée par le module de détermination pour obtenir l'intersection est celle correspondant à un nombre N2 d'incréments de déplacement calculé par l'équation :

$$N2 = N - N1 + 1$$

où N est le nombre total d'incréments de déplacement nécessaires pour joindre le point géographique d'origine au point géographique de destination suivant la trajectoire calculée ;
- les courbes d'iso-déplacement et les courbes d'iso-déplacement inverses sont respectivement des courbes d'iso-déplacement verticales et des courbes d'iso-déplacement verticales inverses définies le long de la trajectoire calculée en projection dans un plan vertical en déterminant les points situés à un même incrément de déplacement d'au moins un point d'une courbe d'iso-déplacement verticale ;
- chaque courbe d'iso-déplacement est une courbe isochrone, le premier module de calcul de trajectoire étant propre à calculer une trajectoire minimisant le temps entre le point géographique d'origine et le point géographique de destination,

ou dans lequel chaque courbe d'iso-déplacement est une courbe d'iso-consommation de carburant, le premier module de calcul de trajectoire étant propre à calculer une trajectoire minimisant la consommation de carburant entre le point géographique d'origine et le point géographique de destination,
ou dans lequel chaque courbe d'iso-déplacement est une courbe d'iso-coût, le coût étant défini comme une fonction du temps de parcours et du carburant consommé, le premier module de calcul de trajectoire étant propre à calculer une trajectoire minimisant le coût entre le point géographique d'origine et le point géographique de destination ;

- le premier module de calcul de trajectoire est propre à calculer une pluralité de courbes d'iso-déplacement à partir d'au moins un point choisi accessible à l'aéronef, à un intervalle de déplacement correspondant à plusieurs incréments de déplacement successifs de l'aéronef depuis le point choisi, les courbes d'iso-déplacement étant obtenues à l'intervalle de déplacement pour un déplacement de l'aéronef jusqu'à un niveau de vol donné à partir de déplacements de l'aéronef à des paliers de vol distincts, et à déterminer, sur la base des courbes d'iso-déplacement jusqu'au niveau de vol donné, obtenues à des paliers de vol distincts, prises au même intervalle de déplacement de l'aéronef, au moins une courbe d'iso-déplacement étendue au niveau de vol donné maximisant le déplacement de l'aéronef à partir du point géographique d'origine ou minimisant le déplacement de l'aéronef vers le point géographique de destination, le premier module de calcul de trajectoire étant propre à définir la trajectoire calculée à partir d'une pluralité de segments de trajectoire, chaque segment de trajectoire étant défini à un niveau de vol donné sur une pluralité de courbes d'iso-déplacement au palier de vol correspondant au niveau de vol donné depuis une courbe d'iso-déplacement étendue ou/et vers une courbe d'iso-déplacement étendue ;

- la perte d'optimalité inclut un allongement du temps de vol entre le point d'origine et le point de destination ou/et une augmentation de la consommation de carburant par rapport à la trajectoire calculée.

L'invention a également pour objet un procédé de calcul de mission d'un aéronef, mis en œuvre par système de de calcul de trajectoires comportant un moteur de calcul de trajectoires de l'aéronef lors de la mission, le procédé comprenant les étapes suivantes :

- calcul par un premier module de calcul de trajectoires du moteur de calcul, d'une trajectoire optimale de mission entre un point géographique d'origine et un point géographique de destination, en fonction de performances avion, de spécifications opérationnelles de mission et d'un contexte météorologique, de préférence évolutif, dans un volume de mission entre le point géographique d'origine et le point géographique de destination, le premier module de calcul de trajectoire calculant une pluralité de courbes d'iso-déplacement depuis le point géographique d'origine vers le point géographique de destination, et calculant la trajectoire à partir de points situés sur les courbes d'iso-déplacement ;

- affichage de la trajectoire calculée sur un afficheur du système de calcul de mission par un gestionnaire d'affichage sur l'afficheur ;

- détermination par un module de détermination du moteur de calcul d'un niveau de risque de perte d'optimalité de la trajectoire réellement suivie par l'aéronef, associé à une modification de trajectoire de l'aéronef par rapport à la trajectoire calculée, le gestionnaire d'affichage affichant sur l'afficheur, en complément de la trajectoire calculée, un indicateur du niveau de risque déterminé.

Le procédé selon l'invention peut comprendre l'une ou plusieurs des caractéristiques suivantes, prise(s) isolément suivant toute combinaison techniquement possible :

- le procédé comprend la détermination, par le module de détermination du niveau de risque, d'une chaussette autour de la trajectoire calculée, la chaussette contenant la trajectoire calculée, le niveau de risque étant donné par la distance entre la trajectoire calculée et les bords de la chaussette, le gestionnaire d'affichage affichant un indicateur de niveau de risque formé par au moins les bords de la chaussette ;

- le module de détermination détermine le niveau de risque en calculant, à partir de la trajectoire calculée, des courbes d'iso-déplacement inverses depuis le point géographique de destination vers le point géographique d'origine, puis en déterminant l'intersection entre au moins une courbe d'iso-déplacement et au moins une courbe d'iso-déplacement inverse ;

- le module de détermination du niveau de risque détermine la chaussette en projection dans un plan horizontal, le niveau de risque étant donné par la distance transversale entre la trajectoire calculée et les bords latéraux de la chaussette ou/et dans lequel le module de détermination du niveau de risque détermine la chaussette en projection dans un plan vertical, le niveau de risque étant défini par la distance entre la trajectoire et les bords supérieur et inférieur de la chaussette.

L'invention sera mieux comprise à la lecture de la description qui va suivre, donnée uniquement à titre d'exemple, en se référant aux dessins annexés, sur lesquels :

- [Fig 1] la figure 1 est un schéma synoptique illustrant un premier système de calcul de mission selon l'invention ;

- [Fig 2] la figure 2 est une vue illustrant le principe de détermination d'isochrones, et d'isochrones étendues à différents niveaux de vol ;

- [Fig 3] la figure 3 est une vue illustrant l'obtention d'une trajectoire à partir d'isochrones étendues ;

- [Fig 4] la figure 4 est une vue illustrant le profil vertical pouvant être obtenu pour une trajectoire calculée ;

- [Fig 5] la figure 5 est une vue analogue à la figure 3 illustrant le principe d'obtention de courbes isochrones inverses à partir du point géographique de destination jusqu'au point géographique d'origine en suivant la trajectoire calculée de la figure 4 ;

- [Fig 6] la figure 6 illustre la définition d'une chaussette de détermination de niveau de risque en projection dans un plan horizontal ;

- [Fig 7] la figure 7 illustre le principe d'obtention d'isochrones verticales à différents paliers de vol à partir de la trajectoire de la figure 4 ;

- [Fig 8] la figure 8 est une vue analogue à la figure 7 illustrant le principe d'obtention d'isochrones verticales inverses et de la chaussette de détermination en projection dans un plan vertical ;

- [Fig 9] la figure 9 est une vue illustrant une variante de l'invention dans laquelle une étape de passage d'une trajectoire libre à une trajectoire contrainte par des routes aériennes a été effectué ;

- [Fig 10] la figure 10 est une vue schématique d'un deuxième système de calcul de mission selon l'invention.

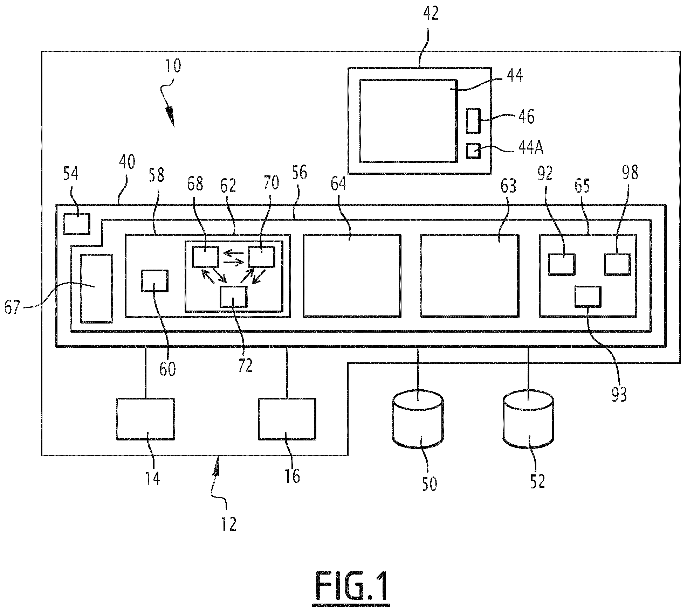

Un premier système 10 de calcul de mission selon l'invention, qui, dans cet exemple, est présent dans le cockpit 12 d'un aéronef, est illustré par la figure 1.

L'aéronef est de préférence un aéronef civil, notamment un avion d'affaires.

D'une manière connue, le cockpit 12 de l'aéronef est destiné à commander l'ensemble des systèmes de l'aéronef lors de son utilisation.

Le cockpit 12 comporte notamment, outre le système 10 de calcul de mission, un système 14 de conduite de vol du cockpit de l'aéronef (« Flight Management System » en anglais ou « FMS »), et un système 16 de gestion et de suivi des différents systèmes avion.

Le système de conduite de vol 14 est destiné à assister le pilote de l'aéronef pour mener la navigation de l'aéronef lors d'une mission. Il est propre à fournir des informations notamment sur la route suivie par l'aéronef, et sur des paramètres d'évolution de l'aéronef tels que la consommation en carburant.

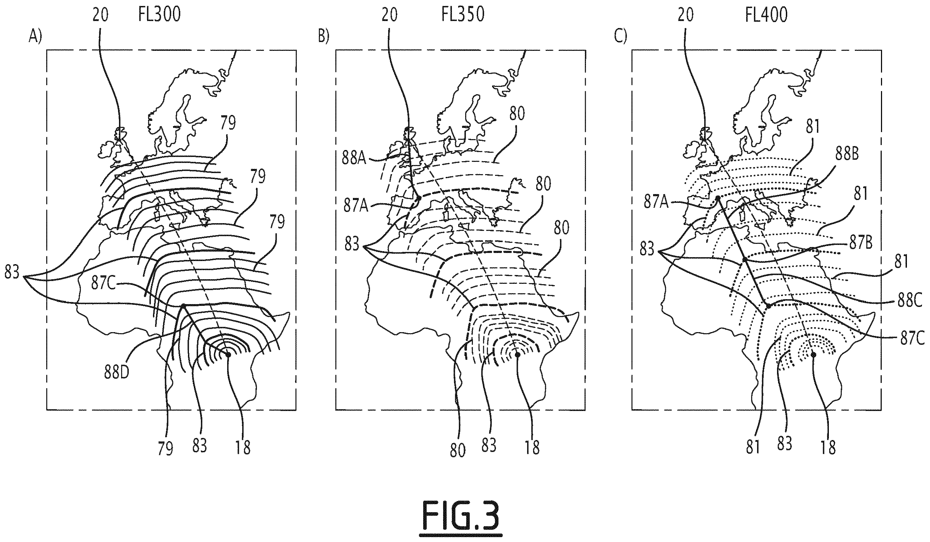

Il est également propre à guider l'aéronef pour lui faire suivre une trajectoire prédéterminée entre un premier point géographique 18 d'origine et un deuxième point géographique 20 de destination (visibles notamment sur la figure 3).

Le système 16 de gestion et de suivi des différents systèmes avion est notamment destiné à permettre à l'équipage de suivre et éventuellement de piloter l'ensemble des systèmes aéronef. Il est propre en particulier à déterminer un état de fonctionnement de l'aéronef, notamment la présence de défauts et de pannes présents sur l'aéronef au sol et/ou en vol. Comme on le verra plus bas, le système de calcul de mission 10 selon l'invention est raccordé au système de gestion 16 pour prendre en compte l'état de l'avion dans les calculs de mission.

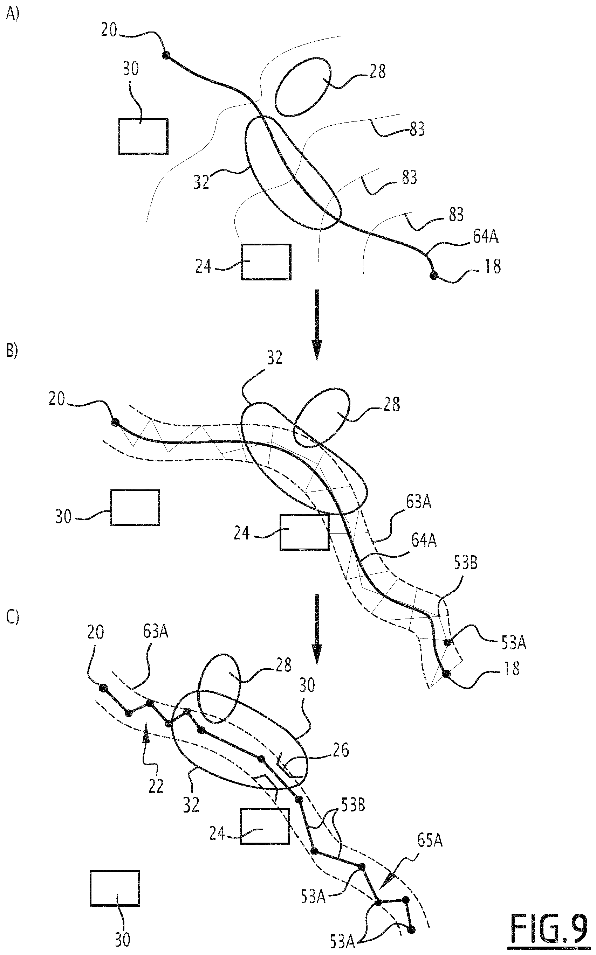

La mission effectuée par l'aéronef comporte au moins une étape 22 (ou « leg »), représentée schématiquement sur la figure 9, entre un premier point géographique 18 d'origine et un deuxième point géographique 20 de destination. Dans certains cas (non représentés), la mission effectuée par l'aéronef comporte une pluralité d'étapes 22 successives, le deuxième point géographique 20 de destination d'une première étape constituant le premier point géographique 18 d'origine d'une deuxième étape.

La mission est effectuée en suivant des spécifications opérationnelles qui comprennent notamment un contexte de mission et un contexte avion.

Le contexte de mission comporte par exemple au moins une contrainte d'opération, notamment un nombre de passagers à transporter, un poids maximum au décollage lié notamment à une longueur de piste disponible, une charge en carburant de navigation, une charge en carburant de réserve, un horaire de départ et/ou un horaire d'arrivée imposés, une distance maximale à parcourir, et/ou une distance à un terrain alternatif en route.

En référence à la figure 9, le contexte de mission comprend avantageusement des contraintes de navigation, comme par exemple des zones 24 ou des niveaux de vol interdits, des routes 26 aériennes ou des niveaux de vol imposés, ou plus globalement des zones de vol libre et/ou des zones de vol imposé par les voies aériennes.

Le contexte de mission comprend avantageusement des contraintes météorologiques telles que des zones 28 de phénomènes météorologiques dangereux notamment de formation de gel ou de cumulonimbus.

Le contexte de mission comprend éventuellement aussi des contraintes de confort passager, notamment des zones 30 de turbulences à éviter, en particulier en fonction d'un niveau de turbulences souhaité, choisi par exemple parmi un niveau faible, un niveau moyen, et un niveau fort de turbulences, ou des zones 32 de couverture de télécommunication par satellite pour permettre une télécommunication entre l'aéronef et le monde extérieur notamment au sol, en particulier choisi parmi un niveau faible, un niveau moyen et un bon niveau de possibilité de communication.

Dans cet exemple, les différentes zones 24 à 32 sont définies de préférence par des coordonnées horizontales (par exemple latitude et longitude) et par des coordonnées verticales en altitude. Dans certains cas, la position des zones 24 à 32 évolue avantageusement au cours du temps. Dans ces cas, les coordonnées précitées évoluent temporellement, définissant une zone quadridimensionnelle (ou 4D) d'évitement ou au contraire une zone quadridimensionnelle de passage souhaité ou contraint.

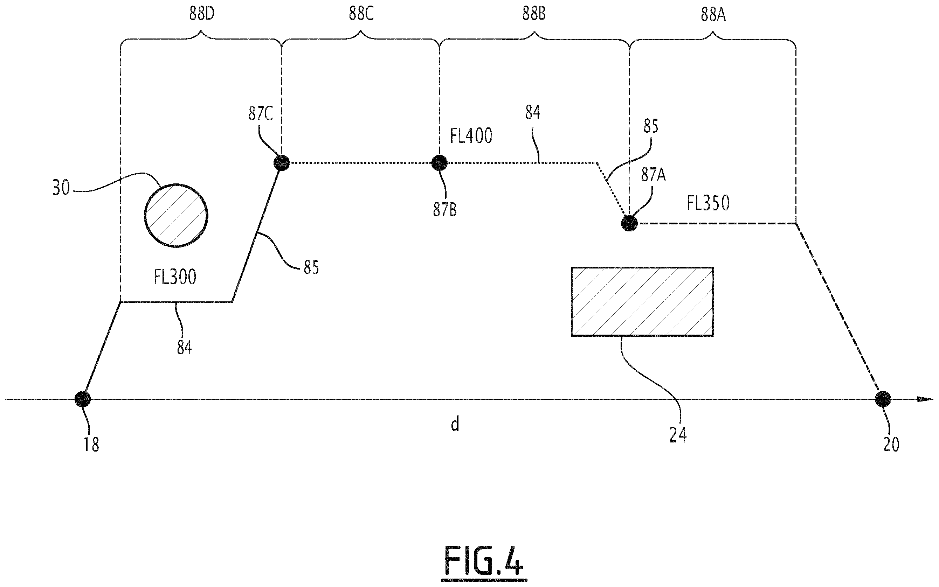

Les zones 24 à 32 définissent donc, dans le plan horizontal illustré sur la figure 9, des sections horizontales d'évitement ou au contraire, des sections horizontales de passage souhaité ou contraint. Elles définissent par ailleurs, dans le plan vertical illustré sur la figure 4, des sections verticales d'évitement ou au contraire, des sections verticales de passage souhaité ou contraint.

Le contexte avion peut comprendre des contraintes d'utilisation liées à des autorisations à partir (ou « dispatch ») et/ou des contraintes liées à un état particulier de l'aéronef en termes de défauts et/ou de pannes sur un ou plusieurs équipements de l'aéronef.

Par exemple, une autorisation à partir liée à certains défauts de l'aéronef peut imposer un niveau de vol maximal et/ou une vitesse maximale. Un défaut de rentrée du train d'atterrissage ou d'un volet peut également imposer une contrainte de consommation en carburant augmentée.

Le système de calcul de mission 10 est destiné à établir une trajectoire de l'aéronef pour effectuer l'étape 22 entre au moins un premier point géographique 18 d'origine et au moins un deuxième point géographique 20 de destination, en tenant compte des spécifications opérationnelles, et notamment du contexte de mission et du contexte avion, tout en suivant les routes aériennes existantes.

La trajectoire obtenue par l'intermédiaire du système de calcul de mission 10 inclut la route de l'aéronef en latitude et en longitude, avec un profil vertical de vol, défini par une ou plusieurs altitudes et des temps de passage. La route est donc déterminée en quatre dimensions.

Avantageusement, le système de calcul de mission 10 est en outre propre à établir des paramètres de plan de vol, notamment le poids et l'équilibre de l'aéronef, le carton de décollage et d'atterrissage (c'est-à-dire les données de vol pour le pilote relatives au guidage telles que les vitesses V1, V2, VR sur la piste, l'accélération au lâcher des freins, le régime moteur au décollage, et/ou l'assiette au décollage), le calcul des masses limites au décollage et à l'atterrissage, la météorologie à basse vitesse (c'est-à-dire en surface) et à grande vitesse (c'est-à-dire en route), les informations de contrôle aérien (service de diffusion ATIS pour « Automated Terminal Information Service », e-NOTAM pour « Notice to airmen » , fréquence de télécommunications, FIRS pour « Flight Information RegionS », centre de contrôle aérien), et/ou les terrains alternatifs disponibles à destination, et en cours de route.

En référence à la figure 1, le système de calcul de mission 10 comporte un moteur de calcul 40 et avantageusement, une interface utilisateur 42 de paramétrage et de restitution formant une platine de mission.

L'interface utilisateur 42 comporte par exemple au moins un afficheur 44, un gestionnaire 44A d'affichage sur l'afficheur 44 et au moins un organe 46 de sélection et de saisie d'information par l'utilisateur, qui peut être un clavier réel ou virtuel, une souris et/ou un système tactile.

L'interface utilisateur 42 est propre à autoriser l'utilisateur à saisir au moins une partie des spécifications opérationnelles, notamment les points géographiques 18, 20 d'origine et de destination, des points de passage, des horaires souhaités, des charges souhaitées, un vent maximum sur la trajectoire, etc.

Elle est propre avantageusement à permettre à l'utilisateur de définir au moins une partie du contexte de mission, en particulier les contraintes de navigation et de confort passager, et/ou de définir au moins une partie du contexte avion.

Un exemple d'interface 42 est décrit dans la demande de brevet français intitulée « Système de calcul de mission d'un aéronef, comportant une platine de mission et procédé associé » déposée sous le numéro 17 01234 par la Demanderesse.

Comme on le verra plus bas, le gestionnaire d'affichage 44A est propre à afficher sur l'afficheur 44, une représentation bidimensionnelle dans un plan horizontal ou vertical de l'environnement topographique dans lequel évolue l'aéronef, de la trajectoire calculée par le système de calcul 10 dans l'environnement topographique et, selon l'invention, un indicateur de niveau de risque de perte d'optimalité de la trajectoire réellement suivie par l'aéronef, associé à une modification de trajectoire par rapport à la trajectoire calculée.

La trajectoire réellement suivie par l'aéronef est celle que suit l'aéronef pendant le vol, en déviation par rapport à la trajectoire calculée, suite à une modification de trajectoire. Cette modification de trajectoire résulte par exemple d'une consigne du contrôle aérien, d'une modification volontaire effectuée par le pilote, liée par exemple à un phénomène météorologique ou à une procédure d'évitement.

Par « perte d'optimalité de la trajectoire réellement suivie par l'aéronef », on entend par exemple un allongement du temps de vol entre le point d'origine 18 et le point de destination 20 ou/et une augmentation de la consommation de carburant, par rapport à la trajectoire calculée qui représente un optimum en terme de temps de vol ou/et en terme de consommation.

Cet indicateur permet au pilote de définir quelle modification de trajectoire est susceptible de conduire à un risque de perte d'optimalité significative. Comme on le verra plus bas, la perte d'optimalité significative est par exemple un allongement du temps de vol supérieur à incrément de temps de calcul de courbes isochrones, et/ou une consommation de carburant supérieure à un incrément de quantité de carburant de calcul de courbes d'iso-consommation de carburant.

Le moteur de calcul 40 est connecté à l'interface 42. Il est avantageusement raccordé également au système de conduite de vol 14, au système de gestion et de suivi 16.

Il est propre à interroger une base de données 50 météorologique et/ou une base de données 52 d'information de navigation, par exemple par l'intermédiaire d'un réseau de données, notamment un réseau de données sans fil.

La base de données météorologique 50 contient des données météorologiques actuelles et prédictives dans la zone de navigation de l'aéronef dans un volume de mission s'étendant entre le point d'origine 18 et le point de destination 20. Le volume de mission présente de préférence une largeur significative, par exemple au moins 700 miles nautiques, de part et d'autre de la trajectoire orthodromique 90 entre le point d'origine 18 et le point de destination 20.

Ces données météorologiques sont fournies à plusieurs niveaux de vol, par exemple tous les 304 m (1000 pieds), à une altitude comprise par exemple entre 0 m et 15545 m (51000 pieds).

Les données météorologiques sont fournies en altitude mais aussi en fournissant un composant météorologique évolutif dans le temps. Ce composant évolutif est obtenu à l'aide de données de prévision météorologiques, pouvant inclure une pluralité de cartes météorologiques à des instants successifs dans le temps (par exemple toutes les heures).

Ces données météorologiques incluent notamment la vitesse et la direction du vent, la température, la pression, les précipitations, les phénomènes dangereux (gel, orages / cumulonimbus), la turbulence, le niveau de la tropopause, les nuages de cendre volcanique, les nuages de poussière / sable, la visibilité, ainsi que les observations aéronautiques sur zone ou en route (METAR, PIREPS) et les prévisions sur zone (TAF)... Elles comportent éventuellement la définition et l'évolution dans le temps et dans l'espace des coordonnées géographiques de zones 28 de phénomènes météorologiques dangereux et/ou de zones de turbulences 30.

Ces données météorologiques définissent un contexte météorologique, de préférence évolutif, dans le volume de mission s'étendant entre le point géographique d'origine 18 et le point géographique de destination 20.

La base de données d'information de navigation 52 contient des données d'information sur les terrains au point d'origine 18 et au point de destination 20, et entre ces points 18, 20. La base de données d'information de navigation 52 comporte avantageusement une sous-base de données aéroports (longueurs de piste, orientation des pistes, pentes, etc.) et une sous-base de données de navigation. Les données de navigation incluent notamment un réseau de points de passage 53A (ou « waypoints ») et les trajectoires 53B imposées entre les points de passage, tel que définies par les autorités aériennes dans chaque pays (voir figure 9).

Elle contient avantageusement la définition des coordonnées géographiques de zones et/ou de niveaux de vol interdits 24, notamment en raison de données géopolitiques, et/ou de routes 26 aériennes imposées.

Elle comporte éventuellement la définition de zones 32 de couverture de télécommunications par satellite (SATCOM).

Le moteur de calcul 40 comporte au moins un calculateur comprenant au moins un processeur 54 et une mémoire 56. La mémoire 56 contient des modules logiciels propres à être exécutés par le processeur 54. En variante, les modules sont réalisés au moins partiellement sous forme de composants logiques programmables, ou encore sous forme de circuits intégrés dédiés.

Dans cet exemple, la mémoire 56 contient un module logiciel 58 d'initialisation de spécifications de mission, propre à acquérir des spécifications opérationnelles de la mission à partir notamment de l'interface 42, et comportant un module logiciel 60 de récupération d'un contexte météorologique à partir de la base de données 50, et un module logiciel 62 de détermination de performances avion, en fonction des spécifications de mission, du contexte météorologique et du contexte avion.

La mémoire 56 contient également un premier module logiciel 64 de calcul d'une première trajectoire de mission optimale 64A, en fonction des performances avion déterminées, du contexte météorologique et des spécifications de mission, le premier module de calcul 64 étant propre à calculer la première trajectoire optimale de mission 64A de manière non contrainte par un réseau de points de passage 53A et/ou de trajectoires 53B imposées entre les points de passage 53A.

Avantageusement, en référence à la figure 9, et comme décrit dans la demande française n°1800734, la mémoire 56 contient aussi un module 63 de définition, autour de la première trajectoire optimale de mission 64A, d'une région d'optimisation 63A de la trajectoire optimale 64A et un deuxième module 65 de calcul d'une trajectoire optimisée 65A de l'aéronef dans la région d'optimisation 63A, de manière contrainte par un réseau de points de passages 53A et/ou de trajectoires 53B imposées entre les points de passage 53A.

Selon l'invention, la mémoire 56 contient aussi un module 67 de détermination d'un niveau de risque de perte d'optimalité de la trajectoire réellement suivie par l'aéronef, associé à une modification de trajectoire par rapport à la trajectoire calculée, la trajectoire calculée étant la trajectoire optimale 64A ou le cas échéant, la trajectoire optimisée 65A.

Le module d'initialisation 58 est propre à acquérir les spécifications opérationnelles de la mission à partir de l'interface 42, et/ou du système de gestion et de suivi 16.

Le module de récupération 60 est propre à interroger la base de données météorologique 50 pour obtenir notamment les vitesses et les directions du vent dans le volume de mission s'étendant entre le point d'origine 18 et le point de destination 20, à plusieurs niveaux de vol.

Le module de détermination 62 comporte une application logicielle 66 de détermination du poids et de l'équilibre de l'aéronef, destinée à déterminer le centre de gravité de l'aéronef, une application logicielle 68 de détermination de performances haute vitesse, et avantageusement une application logicielle 70 de détermination de performances basse vitesse.

L'application 66 de détermination du poids et de l'équilibre de l'aéronef est propre à déterminer la position du centre de gravité de l'aéronef en l'absence de carburant dans l'aéronef (ou « Zéro Fuel Weight Center of Gravity ») et la masse de l'aéronef en l'absence de carburant dans l'aéronef (ou « Zéro Fuel Weight»), en fonction de la masse à vide de l'aéronef, des équipements embarqués dans l'aéronef, des passagers et/ou du fret embarqué, et de leur position dans l'aéronef, ainsi qu'une surveillance du domaine de vol de l'avion (diagramme masse - centrage).

L'application de détermination de performances haute vitesse 68 est propre à déterminer la masse de carburant à embarquer dans l'aéronef sur une trajectoire donnée, par exemple une trajectoire orthodromique ou calculée entre le point d'origine 18 et le point de destination 20, en utilisant la position du centre de gravité et la masse de l'aéronef en l'absence de carburant dans l'aéronef (ou «Zero Fuel Weight») déterminées par l'application 66, une vitesse air prédéterminée, par exemple saisie ou calculée à partir des données saisies par l'interface utilisateur 42, le contexte météorologique récupéré à partir du module 60, notamment des vitesses de vent et des températures et éventuellement le contexte avion, par exemple le type et l'âge des moteurs, récupéré à partir du module d'initialisation 58.

L'application de détermination de performances haute vitesse 68 comporte en outre des fonctions de calcul de consommation instantanée de carburant et de variation de la masse avion instantanée au cours d'une trajectoire, utilisant avantageusement la position du centre de gravité et la masse de l'aéronef en l'absence de carburant dans l'aéronef, une vitesse air prédéterminée, par exemple saisie ou calculée à partir des données saisies par l'interface utilisateur 42, le contexte météorologique récupéré à partir du module 60, notamment des vitesses de vent et des températures et éventuellement le contexte avion, par exemple le type et l'âge des moteurs, récupéré à partir du module d'initialisation 58.

L'application de détermination de performances haute vitesse 68 comporte également une fonction de détermination des niveaux de vol atteignables en fonction de la vitesse air prédéterminée, du contexte météorologique, et éventuellement du contexte avion.

Ces fonctions de calcul de consommation instantanée, de variation de la masse avion instantanée et de détermination des niveaux de vol atteignables sont propres à être appelées par le module de calcul 64 pour le calcul des courbes d'iso-déplacement.

L'application de détermination de performances basse vitesse 70 est propre à déterminer notamment la masse maximale de l'aéronef (et le carton de décollage) permettant à l'aéronef de décoller et/ou d'atterrir sur un terrain, en fonction de données de longueurs de pistes récupérées à partir de la base de données 52, et du contexte météorologique récupéré à partir du module 60.

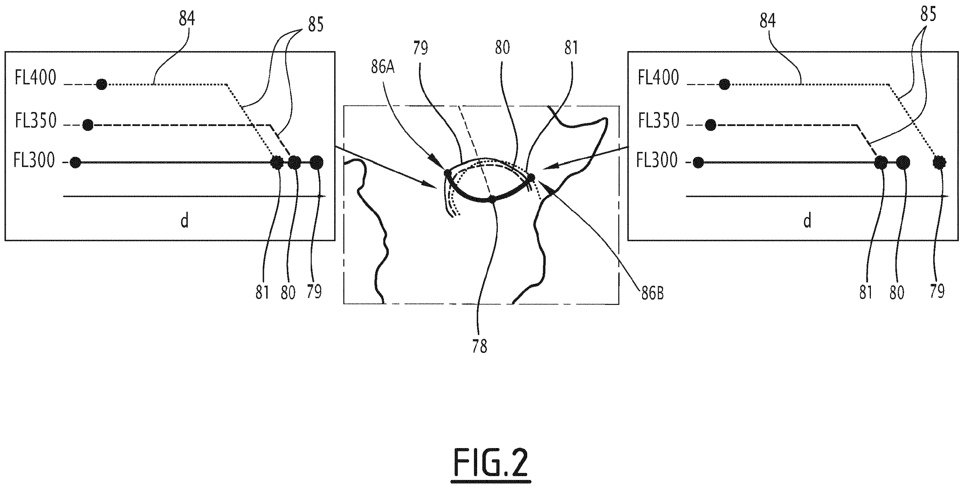

Dans un exemple avantageux, le premier module de calcul 64 est conforme à celui décrit dans EP3715786. En référence à la figure 2, il est alors configuré pour calculer, à partir d'au moins un point choisi 78 accessible à l'aéronef, une pluralité de courbes d'iso-déplacement 79, 80, 81 correspondant chacune à un déplacement de l'aéronef à un palier de vol distinct (par exemple FL300, FL350, FL400), après un ou plusieurs incréments de déplacement. Le nombre de paliers est égal à 3 dans l'exemple représenté. En pratique, le nombre de paliers est supérieur ou égal à 2 et est par exemple compris entre 2 et 20 avantageusement entre 6 et 20.

Le premier module de calcul 64 est propre à déterminer, sur la base des courbes d'iso-déplacement 79, 80, 81 obtenues à un même intervalle de déplacement correspondant à plusieurs incréments de déplacement à différents paliers de vol FL300, FL350, FL400, au moins une courbe d'iso-déplacement étendue 83, visible sur la figure 3, maximisant le déplacement effectué à partir du point géographique d'origine 18 ou minimisant le déplacement à effectuer jusqu'au point géographique de destination 20.

Le premier module de calcul 64 est en outre propre à calculer au moins une trajectoire optimale 64A entre le point d'origine 18 et le point de destination 20 sur la base des courbes d'iso-déplacement étendues 83.

Le point accessible choisi est initialement le point géographique d'origine 18, comme illustré par la figure 2. En variante, le point accessible choisi est un point de fin de montée à partir du point géographique d'origine 18.

Une fois au moins une courbe d'iso-déplacement étendue 83 obtenue, chaque courbe d'iso-déplacement 79, 80, 81 est obtenue à partir de points accessibles 78 situés sur la courbe d'iso-déplacement étendue 83.

Dans l'exemple illustré par les figures, le premier module de calcul 64 est propre, à partir du point géographique d'origine 18 ou de tout point d'une courbe d'iso-déplacement étendue 83 d'établir au moins une courbe d'iso-déplacement 79, 80, 81 sur un incrément de temps prédéterminé à partir du point choisi, en tenant compte de la vitesse air choisie, du contexte météorologique, des performances avion déterminées par fonctions de calcul de l'application 68, et des spécifications opérationnelles définies par le module d'initialisation 58.

En référence à la figure 2, les courbes d'iso-déplacement 79, 80, 81 sont obtenues pour un niveau de vol donné, ici FL300, pour des déplacements de l'aéronef en palier à des niveaux de vol de départ FL300, FL350, FL400 égaux ou distincts du niveau de vol donné FL300 à partir d'un point accessible ici situé sur une courbe d'iso-déplacement 83 du niveau de vol de départ FL300, FL350, FL400 respectif.

Ainsi, à gauche de la figure 2, la courbe d'iso-déplacement 79 est obtenue en faisant évoluer l'aéronef à un palier constant correspondant au niveau de vol donné FL300, à partir d'un point accessible 78 sur la courbe d'iso-déplacement étendue 83 au niveau de vol de départ FL300 qui correspond au niveau de vol donné FL300.

Les courbes d'iso-déplacement 80 et 81 sont obtenues en effectuant une phase 84 de vol en palier à un niveau de vol de départ FL350, FL400 distinct du niveau de vol donné FL300, en partant de la courbe d'iso-déplacement 83 au niveau de vol de départ FL350, FL400 respectif, puis une phase d'atteinte 85 du niveau de vol donné FL300.

La phase d'atteinte 85 comprend par exemple une montée ou une descente suivant un profil prédéterminé, par exemple à pente constante, à vitesse vraie (ou « True Air Speed ») constante ou à Mach constant pour atteindre le niveau de vol donné FL300 à partir du vol en palier effectué à un niveau de vol FL350, FL400 distinct du niveau de vol donné FL300.

Avantageusement, pour un intervalle de déplacement donné correspondant à plusieurs incréments de déplacement, le module de calcul 64 est propre à déterminer un incrément intermédiaire à partir duquel la phase d'atteinte 85 démarre, en déterminant par exemple le temps nécessaire pour atteindre le niveau de vol donné FL300 depuis le niveau de vol de départ FL350, FL400 respectif.

Cet incrément intermédiaire est déterminé en fonction du profil de vol prédéterminé dans la phase 85, en tenant compte de la vitesse air choisie, du contexte météorologique, des performances avion déterminées par les fonctions de calcul des applications 66 et 68, et des spécifications opérationnelles définies par le module d'initialisation 58.

Le module de calcul 64 est ensuite propre à déterminer une courbe d'iso-déplacement intermédiaire, à l'incrément intermédiaire, pour un vol en palier au niveau de vol de départ FL350, FL400, puis à définir les courbes d'iso-déplacement 80, 81 au niveau de vol donné FL300 issues de la phase d'atteinte 85, à l'intervalle de déplacement, à partir de la courbe d'iso-déplacement intermédiaire définie précédemment.

Comme illustré par la figure 2, la courbe d'iso-déplacement étendue 83 est obtenue en superposant les courbes d'iso-déplacement 79, 80, 81 obtenues au même intervalle de déplacement, puis en déterminant le lieu des points sur les courbes d'iso-déplacement 79, 80, 81 maximisant la distance parcourue depuis le point géographique de départ 18 ou minimisant la distance à parcourir vers le point géographique d'arrivée 20.

Ainsi, dans une première direction, à gauche sur la figure 2, le point 86A le plus éloigné du point choisi 18 est situé sur la courbe d'iso-déplacement 79 correspondant à un vol en palier au niveau de vol donné FL300. Au contraire, dans la direction à droite sur la figure 2, le point 86B le plus éloigné du point choisi 18 est un point de la courbe d'iso-déplacement 81 correspondant à un déplacement de l'aéronef en palier à un niveau de vol FL400 distinct du niveau de vol donné FL300, et puis en descente suivant le profil prédéterminé vers le niveau de vol donné FL300.

Les points 86A, 86B de la courbe d'iso-déplacement étendue 83 ainsi formée sont donc situés avantageusement sur plusieurs courbes d'iso-déplacement 79, 80, 81 pour maximiser la distance totale parcourue depuis le point géographique d'origine 18 ou pour minimiser la distance totale vers le point géographique de destination 20.

Le premier module de calcul 64 est propre à sélectivement exclure les points qui sont situés dans les zones ou niveaux de vol interdits 24, dans les zones 28 de phénomènes météorologiques dangereux et/ou dans les zones de turbulences 30. Le module de calcul 24 est propre à exclure également les points qui ne seraient pas situés dans une zone de couverture satellite 32.

Les évitements réalisés des zones quadridimensionnelles définies sont illustrés par exemple la figure 4 en section dans le plan vertical.

Comme visible sur la figure 3, le premier module de calcul 64 est propre à déterminer une pluralité de courbes d'iso-déplacement étendues 83 successives, obtenues à des intervalles de temps successifs, à partir de courbes d'iso-déplacement 79, 80, 81 correspondant chacune à un ou plusieurs incréments de temps au sein de chaque intervalle de déplacement.

Avantageusement, comme représenté sur la figure 3, le premier module de calcul 64 est propre à déterminer les courbes d'iso-déplacement étendues 83 successives à plusieurs niveaux de vol FL300, FL350, FL400.

Le premier module de calcul 64 est propre à choisir une trajectoire optimale 64A en se fondant sur les courbes d'iso-déplacement étendues 83 calculées.

En référence à la figure 3, le premier module de calcul 64 est propre à déterminer chaque point de la trajectoire optimale 64A de manière non contrainte par un réseau de points de passage 53A et/ou de trajectoires 53B imposées entre les points de passage 53A.

Ainsi, la détermination de la trajectoire optimale 64A par le premier module de calcul 64 est mise en œuvre comme si l'aéronef était apte à effectuer un vol libre en tenant compte des spécifications de mission, mais sans tenir compte du réseau de points de passage 53A et/ou de trajectoires 53B imposées entre les points de passage 53A qui sont définis par les autorités de contrôle aérien.

En référence à la figure 3, la trajectoire optimale 64A est déterminée de préférence à partir du point géographique de destination 20, ou d'un point de début de descente vers le point 20, en remontant les courbes d'iso-déplacement 80 au niveau de vol final FL350 ayant permis d'atteindre en premier le point géographique de destination 20 ou le point de début de descente, jusqu'au point 87A de la courbe d'iso-déplacement étendue 83 correspondant au dernier intervalle de déplacement composé de plusieurs incréments d'iso-déplacement. Ceci définit une première section de trajectoire 88A.

Le point 87A de la courbe d'iso-déplacement étendue 83 correspond à un point d'une courbe d'iso-déplacement 79, 80, 81 qui résulte soit d'un vol en palier au même niveau de vol que le niveau de vol final FL350, soit d'une phase 84 de palier à un niveau de vol FL300, FL400 différent du niveau de vol final FL350 et d'une phase 85 d'atteinte du niveau de vol final.

Dans le deuxième cas, représenté à droite sur la figure 3, les courbes d'iso-déplacement 81 à un niveau de vol distinct FL400 sont ensuite remontées jusqu'au point 87B de la courbe d'iso-déplacement étendue 83 adjacente au même niveau de vol FL400 à partir duquel le point 87A avait été obtenu. Ceci définit une deuxième section de trajectoire 88B.

Dans le premier cas, représenté par le point 87B sur la figure 3, les courbes d'iso-déplacement 80 au même niveau de vol FL400 sont remontées jusqu'au point 87C de la courbe d'iso-déplacement étendue 83 adjacente au même niveau de vol FL400 à partir duquel le point 87B avait été obtenu. Ceci définit une troisième section de trajectoire 88C. Le point 87C a ici été obtenu à partir d'une phase 84 de vol en palier au niveau de vol FL300 suivie d'une phase 85 de montée au niveau de vol FL400.

Ce mécanisme est répété jusqu'à atteindre le point géographique d'origine 18, comme illustré à gauche sur la figure 3.

Le premier module de calcul 64 est propre à définir ainsi une trajectoire optimale 64A non seulement dans le plan horizontal, mais également dans le plan vertical.

Le profil de trajectoire dans le plan vertical est illustré sur la figure 4 et comprend une pluralité de sections de trajectoire 88A à 88D. Chaque section de trajectoire 88A, 88B, 88C est déterminée depuis ou/et à partir d'une courbe d'iso-déplacement étendue 83, et comprend soit une phase de palier 84 unique, soit une phase de palier 84, et une phase 85 d'atteinte d'un autre palier.

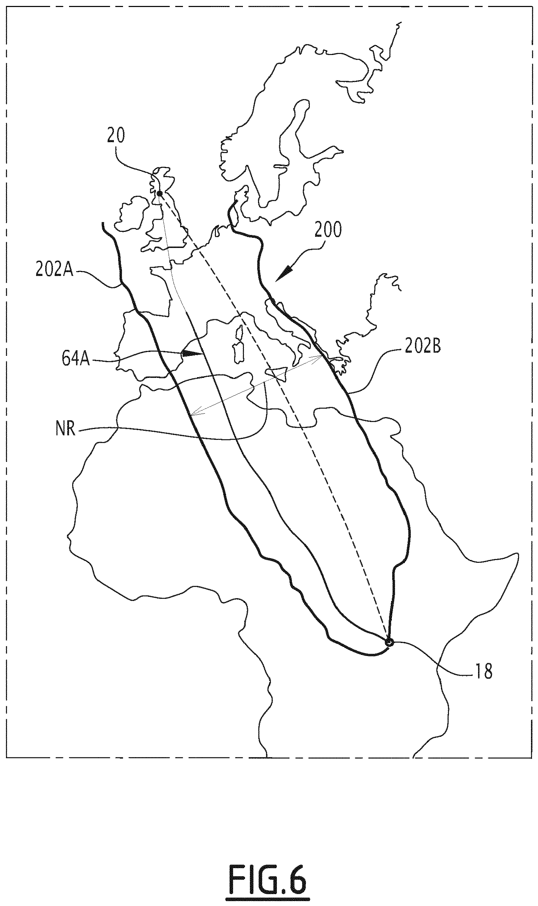

Le profil de la trajectoire 64A dans le plan horizontal est illustré sur la figure 6, en superposition sur une représentation topographique de l'environnement dans lequel évolue l'aéronef.

Dans l'exemple qui vient d'être décrit, les courbes d'iso-déplacement sont avantageusement des courbes isochrones. Par définition, une courbe isochrone est une courbe reliant les points accessibles à l'aéronef à partir d'un point donné (qui peut être le point d'origine 18 ou un point sur une courbe isochrone) en un temps donné qui correspond à un ou plusieurs incréments de temps. Chaque incrément de temps est par exemple compris entre 1 minute et 1 heure, notamment entre 2 minutes et 10 minutes, par exemple 5 minutes.

Dans cet exemple, chaque courbe isochrone est déterminée à partir d'un point donné accessible à l'aéronef en calculant à partir du point donné tous les points accessibles à l'aéronef, à une vitesse air donnée, en tenant compte du contexte météorologique, notamment de la direction et de l'intensité du vent, telles que fournies par le module de récupération 60 et des performances avion, telles que déterminées par les fonctions de calcul de l'application 68.

Avantageusement, le module de calcul 64 est propre à calculer une succession de courbes isochrones 79, 80, 81 à plusieurs paliers de vols, et des courbes isochrones étendues 83 à partir des courbes isochrones 79, 80, 81 obtenues pour un même intervalle de temps.

En référence à la figure 9, lorsqu'il est présent, le module de définition 63 est avantageusement propre à définir la région d'optimisation 63A de la trajectoire en fonction d'une distance latérale prédéterminée à chaque point de la trajectoire optimale 64A définie par le premier module de calcul 64 et en fonction des spécifications opérationnelles de mission, notamment du contexte de mission, en particulier des contraintes de navigation, des contraintes météorologiques, et des contraintes de confort passager.

Avantageusement, le module de définition 63 est propre à délimiter latéralement la région d'optimisation 63A de la trajectoire 64A par des limites latérales s'étendant latéralement à une distance choisie en fonction de la densité du réseau aérien de chaque point de la trajectoire optimale 64A.

Cette distance choisie est généralement inférieure à 1852 km (1000 miles nautiques ou « nm ») et peut être comprise entre 185 km (100 nm) et 926 km (500 nm) dans un réseau de faible densité, par exemple en Afrique, et entre 183 km (99 nm) et 55 km (30 nm) dans un réseau de forte densité comme en Europe.

Ainsi, la région d'optimisation 63A est définie généralement par une bande englobant la trajectoire 64A. La bande est potentiellement contrainte également par des zones de vol interdites 24, par des zones 28 de phénomènes météorologiques dangereux et/ou par des zones de turbulences 30. Elle englobe selon le cas des zones de couverture satellite 32.

Le deuxième module de calcul 65 de trajectoires 65A, lorsqu'il est présent, comporte une application 92 de définition d'un réseau de nœuds entre le point géographique d'origine 18 et le point géographique de destination 20 à partir du réseau de points de passages 53A et/ou de trajectoires 53B imposées entre les points de passage 53A, et une application 93 de définition d'un coût associé au passage d'un nœud à un nœud adjacent parmi les nœuds du réseau.

Le deuxième module de calcul 65 comporte également une application 98 de détermination de la trajectoire optimisée 65A dans le réseau de nœuds sur la base d'une minimisation du coût total cumulé entre le point géographique d'origine 18 et le point géographique de destination 20.

L'application de définition 92 est propre à charger les coordonnées de points de passage 53A et de trajectoires 53B imposées entre les points de passage 53A à partir de la base de données 52, au sein de la région d'optimisation 63A.

L'application de définition 92 est propre à définir, parmi les points de passage 53A, les nœuds qui sont les points de passage 53A possibles pour l'aéronef en tenant compte notamment des contraintes de mission, en particulier des contraintes de navigation, des contraintes météorologiques, et des contraintes de confort passager, telles que définies plus haut.

L'application de définition 93 est propre à définir le coût associé au passage entre deux nœuds adjacents sur la base de la distance géographique séparant les deux nœuds et également du contexte météorologique récupéré à partir du module 60, en particulier du contexte météorologique évolutif et éventuellement du contexte avion, par exemple le type et l'âge des moteurs, récupéré à partir du module d'initialisation 58.

L'application de détermination 98 de la trajectoire optimisée 65A est propre à mettre en œuvre un algorithme de minimisation du coût pour définir la trajectoire la moins coûteuse dans la région d'optimisation 63A passant par les nœuds et par les trajectoires imposées entre les nœuds, depuis le point géographique d'origine 18 jusqu'au point géographique de destination 20.

L'algorithme est par exemple un algorithme de Dijkstra et/ou un algorithme A*. L'algorithme de Dijkstra prend en entrée le réseau pondéré défini plus haut entre le point géographique d'origine 18 et le point géographique de destination 20.

Une description de l'utilisation de l'algorithme de Dijkstra est donnée dans la demande de brevet en France n°1800734.

Une description de l'algorithme A* est par exemple donnée dans l'article téléchargeable à l'adresse suivante : https://fr.wikipedia.org/wiki/Algorithme_A*.

Une fois la trajectoire optimisée 65A obtenue, le moteur de calcul 40 est avantageusement propre à déterminer au moins un paramètre de mission de l'aéronef correspondant à la trajectoire optimisée 65A.

Le paramètre de mission est par exemple une masse totale au décollage de l'aéronef. Cette masse au décollage est calculée à chaque itération par le module de calcul 64 puis par le module de calcul 65, sur la base de la consommation estimée sur la trajectoire entre le point d'origine 18 et le point de destination 20, calculée à l'aide des fonctions de calcul de la consommation instantanée de carburant et de variation de la masse avion instantanée, et sur la base d'une charge en passagers et en fret prédéfinie dans les spécifications opérationnelles.

Le moteur de calcul 40 est ensuite propre à effectuer des itérations de calcul utilisant successivement les modules 64, 65, en déterminant, dans chaque itération, une nouvelle trajectoire optimale 64A à l'aide du premier module de calcul 64 en calculant des nouvelles courbes d'iso-déplacement étendues 83, une nouvelle région d'optimisation 63A à l'aide du module de détermination 63, puis une nouvelle trajectoire optimisée 65A à l'aide du deuxième module de calcul 65, jusqu'à atteindre une convergence sur la valeur du paramètre de mission.

Une fois la convergence obtenue, le moteur de mission 40 est propre à vérifier la cohérence des performances grande vitesse à l'aide de l'application 66. Le moteur de mission 40 est propre à vérifier notamment que la masse au décollage obtenue à l'aide des modules de calcul 64, 65 après convergence est inférieure ou égale à la masse maximale permettant à l'aéronef de décoller obtenue à l'aide de l'application basse vitesse 70 pour s'assurer que l'aéronef pourra décoller sur le terrain choisi pour le décollage.

Une fois la trajectoire optimisée 65A finale obtenue, le deuxième module de calcul 65 fournit un fichier de données comprenant une liste de points de passage 53A, et une liste de trajectoires 53B entre les points de passage 53A.

Le fichier de données fourni par le deuxième module de calcul 65 comporte en outre avantageusement une liste de caps TCA entre les points de passage 53A, une liste de distances DST entre les points de passage 53A, une liste de composantes de vent COMP entre les points de passage 53A, une liste de vitesses vraies TAS entre les points de passage 53A, une liste de vitesses sol GS entre les points de passage 53A, une liste de températures air statique SAT entre les points de passage 53A, une liste de niveaux de turbulence SHR entre les points de passage 53A, une liste de temps estimés d'arrivée ETA à un point de passage 53A, et une liste de temps estimés en route EET.

Ce fichier de données est propre à être récupéré par l'équipage et/ou à être chargé par saisie manuelle ou par transfert de données dans le système de conduite de vol 14, en vue d'être utilisé lors du vol.

Selon l'invention, le module de détermination 67 est propre à évaluer un niveau de risque de perte d'optimalité de la trajectoire réellement suivie par l'aéronef, si une modification de trajectoire était effectuée par l'aéronef par rapport à la trajectoire calculée, cette trajectoire calculée étant la trajectoire optimale 64A ou la trajectoire optimisée 65A.

De préférence, le module de détermination 67 est propre à déterminer le niveau de risque pour une pluralité de points de la trajectoire calculée. Par exemple, le niveau de risque est déterminé au moins pour chaque point de la trajectoire calculée présent sur une courbe d'iso-déplacement 79, 80, 81 de chaque section de trajectoire 88A, 88B, 88C.

Avantageusement, le module de détermination 67 est propre à établir une chaussette 200 autour de la trajectoire calculée, la chaussette 200 incluant la trajectoire calculée, le niveau de risque étant donné par la distance entre la trajectoire calculée, et les bords 202A, 202B de la chaussette 200.

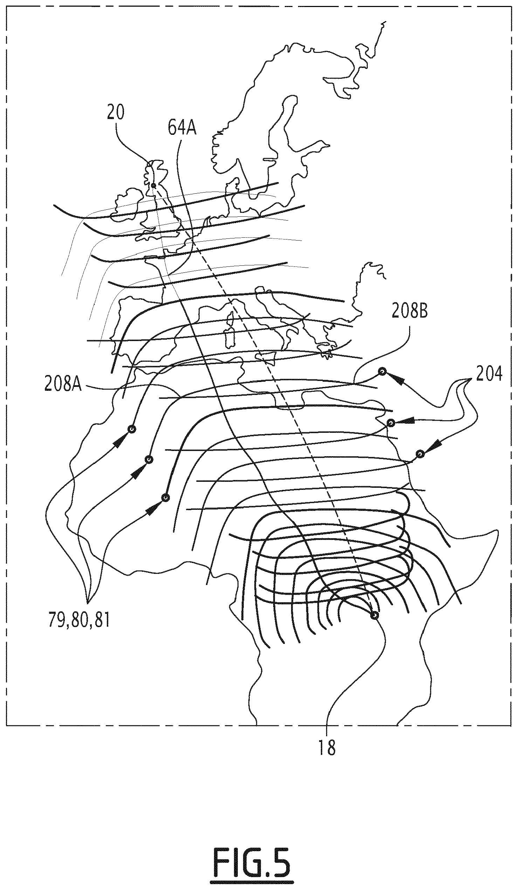

Dans un premier exemple, visible sur les figures 5 et 6, la chaussette 200 est déterminée en projection dans un plan horizontal, le niveau de risque NR étant donné par la distance transversale entre la trajectoire 64A et les bords latéraux 202A, 202B de la chaussette 200.

Comme illustré par la figure 5, le module de détermination 67 est propre à établir la chaussette 200 en calculant des courbes d'iso-déplacement inverses 204 depuis le point géographique de destination 20 vers le point géographique d'origine 18, en imposant les mêmes niveaux de vol que ceux du profil vertical de la trajectoire calculée 64A, tel que visible sur le figure 4. Ces niveaux de vols correspondent à ceux des courbes d'iso-déplacement 79, 80, 81 ayant été utilisées pour déterminer les points 87A, 87B, 87C de la trajectoire 64A.

Ainsi, les courbes d'iso-déplacement inverses 204 suivent le profil vertical de la trajectoire calculée 64A, mais en partant du point géographique de destination 20 au lieu du point géographique d'origine 18 et en arrivant au point géographique d'origine 18 au lieu du point géographique de destination 20.

Les courbes d'iso-déplacement inverses 204 sont obtenues aux mêmes incréments de déplacement (par exemple aux mêmes incréments de temps dans le cas de courbes isochrones) que les incréments de déplacement utilisés pour calculer les courbes d'iso-déplacement 79, 80, 81.

Le module de détermination 67 est propre à obtenir la position des bords latéraux 202A, 202B de la chaussette 200 par l'intersection 208A, 208B entre au moins une courbe d'iso-déplacement 79, 80, 81 contenant un point de la trajectoire 64A et au moins une courbe d'iso-déplacement inverse 204 correspondant à cette courbe d'iso-déplacement 79, 80, 81.

Lorsque la courbe d'iso-déplacement 79, 80, 81 contenant un point de la trajectoire 64A est obtenue après un nombre N1 d'incréments de déplacement, la courbe d'iso-déplacement inverse 204 utilisée par le module de détermination 67 pour obtenir l'intersection 208A, 208B est celle correspondant à un nombre N2 d'incréments de déplacement nombre N2 calculé par l'équation :

$$N2 = N - N1 + 1$$

où N est le nombre total d'incréments de déplacement nécessaires pour joindre le point géographique d'origine 18 au point géographique de destination 20 suivant la trajectoire calculée.

Dans le cas de courbes isochrones, lorsque la courbe d'iso-déplacement 79, 80, 81 contenant un point de la trajectoire 64A est obtenue après un temps T1 (correspondant à N1 incréments de temps), la courbe d'iso-déplacement inverse 204 utilisée par le module de détermination 67 pour obtenir l'intersection 208A, 208B est celle correspondant à un temps T2 correspondant à la différence entre le temps total T pour joindre le point géographique d'origine 18 au point géographique de destination 20 suivant la trajectoire 64A (correspondant à N incréments de temps), et le temps T1, plus le temps correspondant à un incrément de déplacement entre deux courbes isochrones 79, 80, 81 successives.

Chaque intersection 208A, 208B comprend ainsi deux points situés de part et d'autre de la trajectoire 64A.

Les bords latéraux 202A, 202B de la chaussette 200 sont alors obtenus en joignant respectivement les points d'intersection 208A présents d'un premier côté de la trajectoire 64A et les points d'intersection 208B d'un deuxième côté de la trajectoire.

Le niveau de risque de perte d'optimalité de la mission réellement volée, associé à une modification de trajectoire par rapport à la trajectoire calculée 64A est alors défini comme l'étendue transversale de la chaussette 200.

Le niveau de risque est par exemple déterminé pour chaque point de la trajectoire calculée 64A comme l'étendue transversale de la chaussette 200 calculée à partir du point de la trajectoire 64A, perpendiculairement à la tangente locale à la trajectoire 64A.

Plus l'étendue transversale de la chaussette 200 est grande, plus le risque que les caractéristiques de la mission réellement volée soient éloignées de l'optimal calculé en volant la trajectoire 64A est faible lorsque l'équipage effectue une modification de trajectoire par rapport à la trajectoire calculée 64A.

Moins l'étendue transversale de la chaussette 200 est grande, plus le risque que les caractéristiques de la mission réellement volée soit éloignées de l'optimal calculé en volant la trajectoire 64A (« effet falaise ») est élevé lorsque l'équipage effectue une modification de trajectoire par rapport à la trajectoire calculée 64A.

Dans le cas de courbes isochrones, la différence de temps d'arrivée au point géographique de destination 20 par rapport au temps d'arrivée estimé en mettant en œuvre la trajectoire 64A est avantageusement inférieure à un incrément de temps des courbes isochrones, lorsque la modification de trajectoire par rapport à la trajectoire 64A reste confinée dans la chaussette 200.

Au contraire, cette différence de temps d'arrivée au point géographique de destination 20 par rapport au temps d'arrivée estimé en mettant en œuvre la trajectoire 64A est nécessairement supérieure à un incrément de temps des courbes isochrones, lorsque la modification de trajectoire par rapport à la trajectoire 64A sort de la chaussette 200.

Par définition, chaque point situé à l'intérieur de la chaussette 200 est atteignable via une trajectoire dont la différence de temps citée plus haut est inférieure à un incrément de temps des courbes isochrones.

En complément de la projection de la chaussette 200 dans un plan horizontal, le module de détermination 67 est propre avantageusement à déterminer une projection verticale de la chaussette 200 dans un plan vertical, le niveau de risque étant donné par la distance verticale entre la trajectoire 64A et les bords supérieur et inférieur 209A, 209B de la chaussette 200.

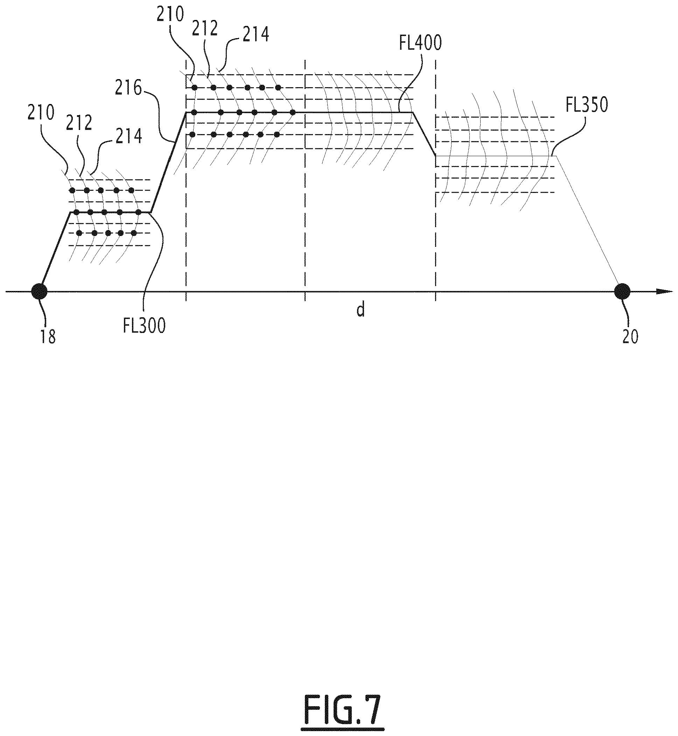

Avantageusement, pour la détermination des bords supérieur et inférieur 209A, 209B, comme illustré par la figure 7, le module de calcul 64 est propre à déterminer des courbes d'iso-déplacement verticales 210, 212, 214 dans un plan vertical, autour du profil vertical 216 de la trajectoire calculée 64A.

Avantageusement, le module de calcul 64 est configuré pour calculer, à partir d'au moins un point choisi 18 accessible à l'aéronef, chaque courbe d'iso-déplacement verticale 210, 212, 214. Les points de chaque courbe d'iso-déplacement verticale correspondent à un déplacement de l'aéronef à des paliers de vol distinct (par exemple FL300, FL350, FL400), après un incrément de déplacement par rapport à une autre courbe d'iso-déplacement verticale 210, 212, 214 en suivant la trajectoire horizontale déjà déterminée.

Pour obtenir un point de la courbe d'iso-déplacement verticale 212 correspondant au même niveau de vol FL300 qu'un point sur une courbe d'iso-déplacement précédente 210, le module de calcul 64 effectue le calcul en maintenant l'aéronef à un palier constant correspondant au niveau de vol donné FL300.

Pour obtenir un point de la courbe d'iso-déplacement verticale 210 correspondant à un autre niveau de vol FL350, FL400 que le niveau de vol FL300 d'un point sur une courbe d'iso-déplacement précédente, le module de calcul 64 met en œuvre le calcul de sorte que l'aéronef effectue une phase d'atteinte de l'autre niveau de vol FL350, FL400 suivie d'une phase de vol en palier à l'autre niveau de vol FL350, FL400.

La génération des courbes d'iso-déplacement dans le plan vertical utilise les sections définies entre deux courbes d'iso-déplacement étendues 83 lors de la construction de la trajectoire optimale dans le plan horizontal. Les courbes d'iso-déplacement à l'intérieur d'une section (courbes 212, 213, 214...) sont obtenues en volant en palier depuis le point correspondant de la courbe d'iso-déplacement précédente (respectivement 210, 212, 213...) pour chaque niveau de vol atteignable par l'avion.

Lors d'un changement de section, on calcule la courbe d'iso-déplacement verticale depuis la dernière courbe d'iso-déplacement de la section précédente, et ce avec la possibilité de changer ou non de niveau de vol.

Comme précédemment, le module de détermination 67 est propre à établir la chaussette 200 en calculant des courbes d'iso-déplacement verticales inverses 218 depuis le point géographique de destination 20 vers le point géographique d'origine 18 suivant la méthode décrite ci-dessus pour les courbes d'iso-déplacement verticales 210, 212, 214 le long de la trajectoire horizontale définie précédemment.

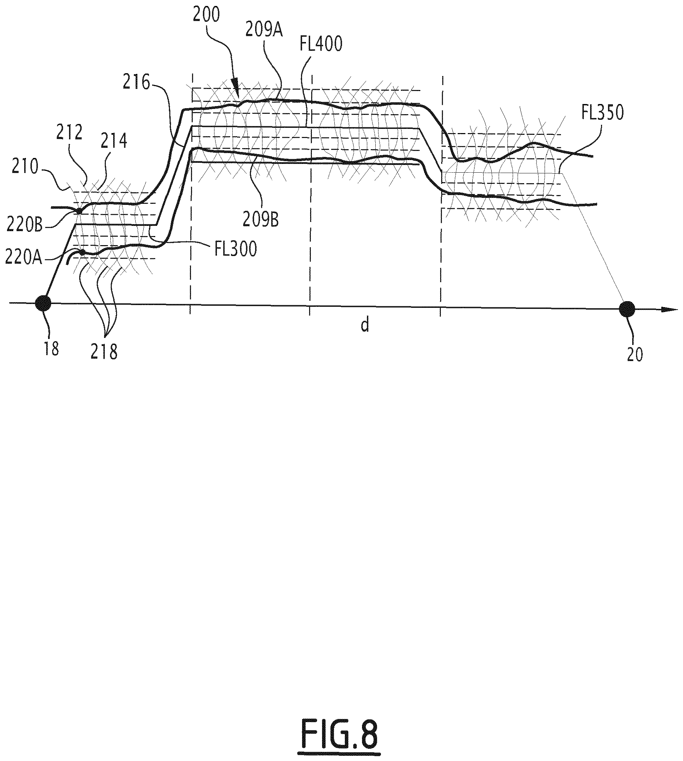

En référence à la figure 8, le module de détermination 67 est propre à obtenir la position des bords supérieur et inférieur 209A, 209B de la chaussette 200 par l'intersection 220A, 220B entre au moins une courbe d'iso-déplacement verticale 210, 212, 214 contenant un point de la trajectoire 64A et au moins une courbe d'iso-déplacement verticale inverse 218 correspondant à cette courbe d'iso-déplacement 210, 212, 214.

Lorsque la courbe d'iso-déplacement verticale 210, 210, 214 contenant un point de la trajectoire 64A est obtenue après un nombre N1 d'incréments de déplacement, la courbe d'iso-déplacement verticale inverse 218 utilisée par le module de détermination 67 pour obtenir l'intersection 220A, 220B est celle correspondant à un nombre N2 d'incréments de déplacement nombre N2 calculé par l'éuation :

$$N2 = N - N1 + 1$$

où N est le nombre total d'incréments de déplacement nécessaires pour joindre le point géographique d'origine 18 au point géographique de destination 20 suivant la trajectoire calculée.

Les bords supérieur et inférieur 209A, 209B de la chaussette 200 sont alors obtenus en joignant respectivement les points d'intersection 208A présents au-dessus de la trajectoire 64A et les points d'intersection 208B présents en dessous de la trajectoire 64A.

Comme illustré par la figure 6, le gestionnaire d'affichage 44A est propre à afficher sur l'afficheur 44, en superposition d'une représentation topographique de l'environnement dans lequel évolue l'aéronef, la trajectoire 64A, 65A calculée en projection horizontale et autour de cette trajectoire calculée 64A, 65A, une représentation de la chaussette 200 avec ses bords latéraux 202A, 202B.

Cette représentation de la chaussette 200 constitue pour l'équipage un indicateur de niveau de risque que les caractéristiques de la mission réellement volée soit éloignées de l'optimal calculé en volant la trajectoire 64A, associé à une modification de trajectoire par rapport à la trajectoire calculée 64A, 65A.

En effet, l'équipage peut directement apprécier, en fonction de la largeur de la chaussette 200 en un point donné de la trajectoire 64A, 65A, si la modification de trajectoire envisagée ou imposée est susceptible de conduire à ne plus respecter les spécifications opérationnelles, par exemple en terme de temps estimé d'arrivée ou/et de carburant consommé. En particulier, lorsque la chaussette 200 est étroite dans une région particulière, l'équipage est conscient que toute altération de trajectoire peut engendrer une conséquence notable sur le respect des spécifications opérationnelles.

Avantageusement, le gestionnaire d'affichage 44A est propre à afficher sur l'afficheur 44, en superposition d'une représentation topographique de l'environnement dans lequel évolue l'aéronef, la trajectoire 64A, 65A calculée en projection verticale et autour de cette trajectoire calculée 64A, 65A, une représentation de la chaussette 200 avec ses bords supérieur et inférieur 209A, 209B

Un procédé de calcul d'une mission, mis en œuvre à l'aide du système 10 selon l'invention, va maintenant être décrit.

Ce procédé est mis en œuvre par exemple lors de la préparation de la mission, pour établir sa faisabilité, pour préparer de manière plus précise la mission, ou pour tenir compte d'un changement de dernière minute dans une mission déjà préparée.

En variante, ce procédé est mis en œuvre lors du suivi de la mission, ou pour tester des hypothèses de modification de la mission, pour l'optimiser, ou pour la reconfigurer.

Initialement, l'utilisateur, notamment l'équipage, saisit au moins une partie des spécifications opérationnelles à l'aide de l'interface de paramétrage 42. L'utilisateur définit par exemple pour chaque étape de la mission, le point géographique d'origine 18, le point géographique de destination 20 et éventuellement, un nombre de passagers à transporter, une vitesse air souhaitée, un horaire de départ et/ou un horaire d'arrivée imposé, une distance maximale à parcourir.

Puis, lorsqu'il souhaite définir une trajectoire possible, il active le moteur de calcul 40. Le module d'initialisation 58 récupère les spécifications opérationnelles à partir notamment de l'interface 42 pour obtenir toutes les informations sur chaque étape de la mission.

Le module d'initialisation 58 récupère avantageusement d'autres spécifications opérationnelles à partir du système de gestion et de suivi 16 de l'aéronef.

Cette étape initialise les spécifications opérationnelles liées au contexte de mission et au contexte avion, par exemple la présence de pannes ou d'autorisations à partir. Cette étape initialise également les spécifications opérationnelles de confort passager, notamment en termes de connectivité et de niveau de turbulences. Cette étape de spécification des données météo acceptable est avantageusement faite au niveau de l'interface utilisateur 42.

L'initialisation est faite avantageusement en considérant une trajectoire purement orthodromique en atmosphère standard (données de vol « parfaites »).

Puis, le module 60 de récupération du contexte météorologique interroge la base de données météorologique 50 pour obtenir notamment les vitesses et les directions du vent entre le point d'origine 18 et le point de destination 20, à plusieurs niveaux de vol.

Le module de détermination de performances avion 62 est alors activé. L'application 66 de détermination du poids et de l'équilibre détermine la masse de l'aéronef et la position du centre de gravité de l'aéronef en l'absence de carburant dans l'aéronef (« Zéro Fuel Weight » et « Zéro Fuel Weight Center of Gravity »), en fonction de la masse à vide de l'aéronef, des équipements embarqués dans l'aéronef, des passagers et/ou du fret embarqué, et de leur position dans l'aéronef.

Sur cette base, sur la base du contexte météorologique récupéré par le module de récupération 60, sur la base du contexte avion récupéré à partir du module d'initialisation 58, et sur la base de la vitesse air souhaitée, l'application de détermination de performances haute vitesse 68 détermine une trajectoire initiale de l'aéronef et la consommation de l'aéronef associée en utilisant la position du centre de gravité déterminée par l'application 66.

L'application 68 calcule alors l'ensemble des paramètres de mission, en particulier la route, l'heure d'arrivée, le profil de vol, et la consommation en carburant, ce qui permet d'en déduire notamment la masse au décollage.

Le premier module de calcul 64 calcule alors à partir d'au moins un point choisi 78 accessible à l'aéronef, une pluralité de courbes d'iso-déplacement 79, 80, 81 correspondant chacune à un déplacement de l'aéronef à un palier de vol distinct (par exemple FL300, FL350, FL400), après un ou plusieurs incréments de déplacement.

Avantageusement, comme décrit dans EP3715786, le premier module de calcul 64 détermine ensuite sur la base des courbes d'iso-déplacement 79, 80, 81 obtenues à un même intervalle de déplacement correspondant à plusieurs incréments de déplacement à différents paliers de vol FL300, FL350, FL400, au moins une courbe d'iso-déplacement étendue 83, maximisant le déplacement effectué à partir du point géographique d'origine 18 ou minimisant le déplacement à effectuer vers le point géographique de destination 20.

Le premier module de calcul 64 calcule alors au moins une trajectoire optimale 64A entre le point d'origine 18 et le point de destination 20 sur la base de courbes d'iso-déplacement 79, 80, 81 et éventuellement, sur la base des courbes d'iso-déplacement étendues 83.

Le premier module de calcul 64 établit au moins chaque courbe d'iso-déplacement 79, 80, 81 sur un incrément de temps prédéterminé à partir du point choisi, en tenant compte de la vitesse air choisie, du contexte météorologique, des performances avion déterminées par les fonctions de calcul de consommation instantanée de carburant et de variation de la masse avion instantanée et de détermination des niveaux de vol atteignables décrites plus haut, et des spécifications opérationnelles définies par le module d'initialisation 58.

Le premier module de calcul 64 est propre à sélectivement exclure les points qui sont situés dans les zones ou niveaux de vol interdits 24, dans les zones 28 de phénomènes météorologiques dangereux et/ou dans les zones de turbulences 30. Le module de calcul 24 est propre à exclure également les points qui ne seraient pas situés dans une zone de couverture satellite 32.

Le premier module de calcul 64 détermine chaque point de la trajectoire optimale 64A de manière non contrainte par un réseau de points de passage 53A et/ou de trajectoires 53B imposées entre les points de passage 53A.

En référence à la figure 3, la trajectoire optimale 64A est déterminée de préférence à partir du point géographique de destination 20, ou d'un point de début de descente vers le point 20, en remontant les courbes d'iso-déplacement 80 au niveau de vol final FL350 ayant permis d'atteindre en premier le point géographique de destination 20 ou le point de début de descente, jusqu'au point 87A de la courbe d'iso-déplacement étendue 83 correspondant au dernier intervalle de déplacement composé de plusieurs incréments d'iso-déplacement. Ceci définit une première section de trajectoire 88A

La trajectoire optimale 64A et la masse correspondant de l'aéronef au décollage sont obtenues.

Dans cet exemple, des courbes d'iso-déplacement 79, 80, 81 sont des courbes isochrones telles que définies plus haut. Chaque incrément de temps est par exemple compris entre 1 minute et 1 heure, notamment entre 2 minutes et 10 minutes, par exemple 5 minutes. Chaque intervalle de temps entre deux courbes d'iso-déplacement étendues 83 est alors défini avantageusement par au moins 3 incréments de temps, notamment par entre 4 et 20 incréments de temps.

Comme précisé plus haut, la trajectoire optimale 64A est obtenue à chaque itération de manière non contrainte par le réseau de points de passage 53A et/ou de trajectoires 53B imposées entre les points de passage 53A.

Eventuellement, à chaque itération, comme illustré sur la figure 9, le module de définition 63 définit avantageusement la région d'optimisation 63A de la trajectoire autour de la trajectoire optimale 64A en fonction d'une distance latérale prédéterminée à chaque point de la trajectoire optimale 64A définie par le premier module de calcul 64 et en fonction des spécifications opérationnelles de mission, notamment du contexte de mission, en particulier des contraintes de navigation, des contraintes météorologiques, et des contraintes de confort passager.

Avantageusement, le module de définition 63 délimite latéralement la région d'optimisation 63A de la trajectoire 64A par des limites latérales s'étendant latéralement à une distance choisie en fonction de la densité du réseau aérien de chaque point de la trajectoire optimale 64A.

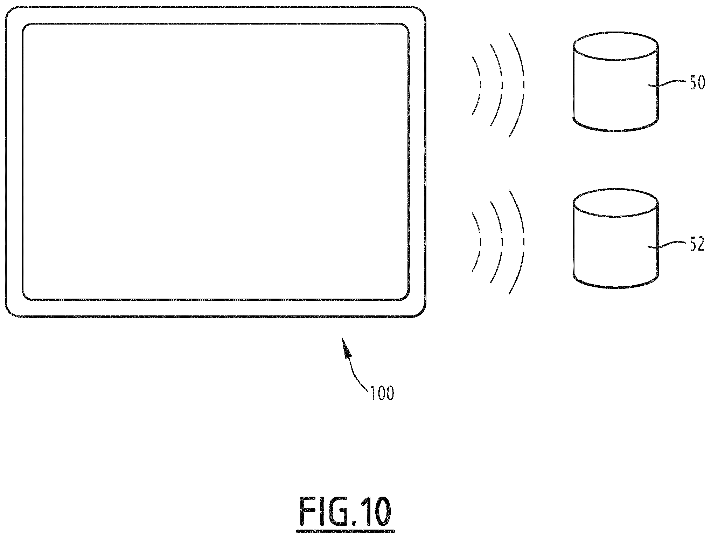

Ensuite, comme illustré par la figure 10, l'application de définition 92 charge les coordonnées de points de passage 53A et de trajectoires 53B imposées entre les points de passage 53A à partir de la base de données 52, au sein de la région d'optimisation 63A.

L'application de définition 92 définit, parmi les points de passage 53A, les noeuds 96 qui sont les points de passage 53A possibles pour l'aéronef en tenant compte notamment des contraintes de mission, en particulier des contraintes de navigation, des contraintes météorologiques, et des contraintes de confort passager.

L'application de définition 93 définit en outre le coût associé au passage entre deux noeuds adjacents 96 sur la base de la distance géographique séparant les deux noeuds 96, et également du contexte météorologique récupéré à partir du module 60, et éventuellement du contexte avion, par exemple le type et l'âge des moteurs, récupéré à partir du module d'initialisation 58.

L'application de détermination 98 de la trajectoire optimisée 65A met ensuite en oeuvre un algorithme de minimisation du coût pour définir la trajectoire la moins coûteuse passant par les noeuds 96 et par les trajectoires imposées entre les noeuds 96, depuis le point géographique d'origine 18 jusqu'au point géographique de destination 20. Cet algorithme est par exemple par un algorithme de Dijkstra. Une trajectoire optimisée 65A est alors obtenue en minimisant le coût, comme décrit dans la demande de brevet n°1800734.

La trajectoire optimisée 65A obtenue à chaque itération est contrainte par un réseau de points de passages 53A et de trajectoires imposées 53B entre les points de passage 53A dans le réseau aérien.

Le moteur de calcul 40 calcule alors l'ensemble des paramètres de mission sur la base de la trajectoire optimisée 65A obtenue à l'itération courante, et détermine la différence entre le paramètre de mission à optimiser (par exemple la masse au décollage) pour la trajectoire initiale et le paramètre de mission à optimiser pour la trajectoire optimisée 65A.

Le moteur de calcul effectue alors de nouveaux calculs de trajectoires 64A, 65A, comme décrit précédemment, en utilisant les courbes d'iso-déplacement, jusqu'à ce que le paramètre de mission, ici la masse au décollage, converge vers une valeur de paramètres de mission souhaitée.

La convergence est par exemple déterminée lorsque la différence entre la valeur du paramètre de mission pour la trajectoire déterminée à l'itération précédente et celle déterminée à l'itération courante est inférieure à une valeur prédéterminée.

En particulier, dans le cas de la masse au décollage, la différence entre la masse au décollage pour la trajectoire déterminée à l'itération précédente et celle déterminée à l'itération courante doit être inférieure à une masse prédéterminée par exemple égale à 100 livres.

En variante, le paramètre de mission est la masse à l'atterrissage ou la distance parcourue le long de la trajectoire.

Avantageusement, après convergence, le moteur de mission 40 vérifie la cohérence des performances grande vitesse à l'aide de l'application 66.

Le moteur de mission 40 vérifie notamment que la masse au décollage obtenue à l'aide des modules de calcul 64, 65 après convergence est inférieure ou égale à la masse maximale permettant à l'aéronef de décoller obtenue à l'aide de l'application basse vitesse 70 pour s'assurer que l'aéronef pourra décoller sur le terrain choisi pour le décollage.

Selon l'invention, le module de détermination 67 évalue un niveau de risque de perte d'optimalité des caractéristiques de la mission, si une modification de trajectoire était effectuée par l'aéronef par rapport à la trajectoire calculée, cette trajectoire calculée étant la trajectoire optimale 64A ou la trajectoire optimisée 65A.

De préférence, le module de détermination 67 est détermine le niveau de risque pour une pluralité de points de la trajectoire calculée. Par exemple, le niveau de risque est déterminé au moins pour chaque point de la trajectoire calculée présent sur une courbe d'iso-déplacement 79, 80, 81 de chaque section de trajectoire 88A, 88B, 88C.

Avantageusement, le module de détermination 67 établit une chaussette 200 autour de la trajectoire calculée, la chaussette 200 incluant la trajectoire calculée.

Dans un premier exemple, visible sur les figures 5 et 6, la chaussette 200 est déterminée en projection dans un plan horizontal, le niveau de risque NR étant donné par la distance transversale entre la trajectoire 64A et les bords latéraux 202A, 202B de la chaussette 200.

Comme illustré par la figure 5, le module de détermination 67 établit la chaussette 200 en calculant des courbes d'iso-déplacement inverses 204 depuis le point géographique de destination 20 vers le point géographique d'origine 18, en imposant les mêmes niveaux de vol que ceux du profil vertical de la trajectoire calculée 64A, tel que visible sur le figure 4. Ces niveaux de vols correspondent à ceux des courbes d'iso-déplacement 79, 80, 81 ayant été utilisées pour déterminer les points 87A, 87B, 87C de la trajectoire 64A.

Les courbes d'iso-déplacement inverses 204 sont obtenues aux mêmes incréments de déplacement (par exemple aux mêmes incréments de temps dans le cas de courbes isochrones) que les incréments de déplacement utilisés pour calculer les courbes d'iso-déplacement 79, 80, 81.

Le module de détermination 67 obtient la position des bords latéraux 202A, 202B de la chaussette 200 par l'intersection 208A, 208B entre au moins une courbe d'iso-déplacement 79, 80, 81 contenant un point de la trajectoire 64A et au moins une courbe d'iso-déplacement inverse 204 correspondant à cette courbe d'iso-déplacement 79, 80, 81.

Lorsque la courbe d'iso-déplacement 79, 80, 81 contenant un point de la trajectoire 64A est obtenue après un nombre N1 d'incréments de déplacement, la courbe d'iso-déplacement inverse 204 utilisée par le module de détermination 67 pour obtenir l'intersection 208A, 208B est celle correspondant à un nombre N2 d'incréments de déplacement nombre N2 calculé par l'éuation :

$$N2 = N - N1 + 1$$

où N est le nombre total d'incréments de déplacement nécessaires pour joindre le point géographique d'origine 18 au point géographique de destination 20 suivant la trajectoire calculée.

Chaque intersection 208A, 208B comprend ainsi deux points situés de part et d'autre de la trajectoire 64A.

Les bords latéraux 202A, 202B de la chaussette 200 sont alors obtenus en joignant respectivement les points d'intersection 208A présents d'un premier côté de la trajectoire 64A et les points d'intersection 208B d'un deuxième côté de la trajectoire.

Le niveau de risque de risque de perte d'optimalité de la trajectoire réellement suivie par l'aéronef, associé à une modification de trajectoire par rapport à la trajectoire calculée 64A est alors défini comme l'étendue transversale de la chaussette 200.

Le niveau de risque est par exemple déterminé pour chaque point de la trajectoire calculée 64A comme l'étendue transversale de la chaussette 200 calculée à partir du point de la trajectoire 64A, perpendiculairement à la tangente locale à la trajectoire 64A.

En complément de la projection de la chaussette 200 dans un plan horizontal, le module de détermination 67 détermine avantageusement une projection verticale de la chaussette 200 dans un plan vertical, le niveau de risque étant donné par la distance verticale entre la trajectoire 64A et les bords supérieur et inférieur 209A, 209B de la chaussette 200.

Avantageusement, pour la détermination des bords supérieur et inférieur 209A, 209B, comme illustré par la figure 7, le module de calcul 64 détermine des courbes d'iso-déplacement verticales 210, 212, 214 dans un plan vertical, autour du profil vertical 216 de la trajectoire calculée 64A.

Avantageusement, le module de calcul 64 calcule, à partir d'au moins un point choisi 18 accessible à l'aéronef, chaque courbe d'iso-déplacement verticale 210, 212, 214. Les points de chaque courbe d'iso-déplacement verticale correspondent à un déplacement de l'aéronef, après un incrément de déplacement par rapport à une autre courbe d'iso-déplacement verticale 210, 212, 214 en suivant la trajectoire horizontale déjà déterminée.

Comme précédemment, le module de détermination 67 établit la chaussette 200 en calculant des courbes d'iso-déplacement verticales inverses 218 depuis le point géographique de destination 20 vers le point géographique d'origine 18 suivant la méthode décrite ci-dessus pour les courbes d'iso-déplacement verticale 210, 212, 214 le long de la trajectoire horizontale définie précédemment.

En référence à la figure 8, le module de détermination 67 obtient la position des bords supérieur et inférieur 209A, 209B de la chaussette 200 par l'intersection 220A, 220B entre au moins une courbe d'iso-déplacement verticale 210, 212, 214 contenant un point de la trajectoire 64A et au moins une courbe d'iso-déplacement verticale inverse 218 correspondant à cette courbe d'iso-déplacement 210, 212, 214.

Lorsque la courbe d'iso-déplacement verticale 210, 210, 214 contenant un point de la trajectoire 64A est obtenue après un nombre N1 d'incréments de déplacement, la courbe d'iso-déplacement verticale inverse 218 utilisée par le module de détermination 67 pour obtenir l'intersection 220A, 220B est celle correspondant à un nombre N2 d'incréments de déplacement nombre N2 calculé par l'éuation :

$$N2 = N - N1 + 1$$

où N est le nombre total d'incréments de déplacement nécessaires pour joindre le point géographique d'origine 18 au point géographique de destination 20 suivant la trajectoire calculée.

Les bords supérieur et inférieur 209A, 209B de la chaussette 200 sont alors obtenus en joignant respectivement les points d'intersection 208A présents au-dessus de la trajectoire 64A et les points d'intersection 208B présents en dessous de la trajectoire 64A.

Comme illustré par la figure 6, le gestionnaire d'affichage 44A affiche sur l'afficheur 44, en superposition d'une représentation topographique de l'environnement dans lequel évolue l'aéronef, la trajectoire 64A, 65A calculée en projection horizontale et autour de cette trajectoire calculée 64A, 65A, une représentation de la chaussette 200 avec ses bords latéraux 202A, 202B.

Cette représentation de la chaussette 200 constitue pour l'équipage un indicateur de niveau de risque de perte d'optimalité des caractéristiques de la mission, associé à une modification de trajectoire par rapport à la trajectoire calculée 64A, 65A.

En effet, l'équipage peut directement apprécier, en fonction de la largeur de la chaussette 200 en un point donné de la trajectoire 64A, 65A, si la modification de trajectoire envisagée ou imposée est susceptible de conduire à ne plus respecter les spécifications opérationnelles, par exemple en terme de temps estimé d'arrivée ou/et de carburant consommé. En particulier, lorsque la chaussette 200 est étroite dans une région particulière, l'équipage est conscient que toute altération de trajectoire peut engendrer une conséquence notable sur le respect des spécifications opérationnelles.

Avantageusement, le gestionnaire d'affichage 44A affiche sur l'afficheur 44, en superposition d'une représentation topographique de l'environnement dans lequel évolue l'aéronef, la trajectoire 64A, 65A calculée en projection verticale et autour de cette trajectoire calculée 64A, 65A, une représentation de la chaussette 200 avec ses bords supérieur et inférieur 209A, 209B

Dans la variante illustrée par la figure 10, le système de calcul de 10 est intégré au sein d'un bagage de vol électronique (« Electronic Flight Bag » ou « EFB » en anglais), ou d'un dispositif électronique portable 100.

Le dispositif électronique portable 100 est par exemple raccordé aux bases de données 50, 52 par une liaison de données sans fil suivant un protocole de transmission sans fil par exemple de type Wifi (par exemple suivant la Norme IEEE 802.11), ou Bluetooth (par exemple suivant la Norme IEEE 802.15-1-2005).

Dans une autre variante, chaque courbe d'iso-déplacement calculée par le module de calcul 64 est une courbe d'iso-consommation de carburant. Chaque courbe d'iso-déplacement inverse est également une courbe d'iso-consommation de carburant.

Le premier module de calcul 64 est propre, à partir de tout point choisi accessible à l'aéronef d'établir une pluralité de courbes d'iso-consommation de carburant, correspondant à des paliers à des niveaux de vols distincts, sur un incrément de carburant consommé prédéterminé à partir du point choisi, puis à déterminer une courbe d'iso-consommation de carburant étendue à partir de la pluralité de courbes d'iso-consommation de carburant.

Par définition, une courbe d'iso-consommation de carburant est une courbe reliant les points accessibles à l'aéronef à partir d'un point donné avec une consommation en carburant donnée qui correspond à un ou plusieurs incréments de carburant consommé. Chaque incrément de temps consommé est choisi à une valeur constante par exemple comprise entre 22,7 kg (50 livres) et 453,6 kg (1000 livres), notamment entre 36,3 kg (80 livres) et 54,4 kg (120 livres).

Dans cet exemple, chaque courbe d'iso-consommation de carburant est déterminée à partir d'un point choisi en calculant à partir du point choisi tous les points accessibles à l'aéronef, à une vitesse air donnée, en tenant compte du contexte météorologique, notamment de la direction et de l'intensité du vent, tels que fournies par le module de récupération 60 et des performances avion, telles que déterminées par le module de détermination 62.

Comme précédemment, le premier module de calcul 64 est propre à sélectivement exclure les points qui sont situés dans les zones ou niveaux de vol interdits 24, dans les zones 28 de phénomènes météorologiques dangereux et/ou dans les zones de turbulences 30. Au contraire, le premier module de calcul 64 est propre à exclure également les points qui ne seraient pas situés dans une zone de couverture satellite 32.

Le premier module de calcul 64 est ensuite propre à définir une trajectoire optimale 64A en choisissant sur des courbes d'iso-consommation de carburant étendues successives des points successifs de la trajectoire optimale 64A.

Dans une autre variante, les courbes d'iso-déplacement sont des courbes d'iso-coût, le coût étant défini comme une fonction du temps de parcours et du carburant consommé, par exemple comme un rapport du temps de parcours et du carburant consommé. Chaque courbe d'iso-déplacement inverse est également une courbe d'iso-coût.

Chaque incrément de déplacement est un incrément de coût d'une valeur donnée constante.

Chaque courbe d'iso-coût est déterminée à partir d'un point choisi en calculant à partir du point choisi tous les points accessibles à l'aéronef, à une vitesse air donnée, en tenant compte du contexte météorologique, notamment de la direction et de l'intensité du vent, tels que fournies par le module de récupération 60 et des performances avion, telles que déterminées par les fonctions de calcul de l'application 68.

Comme précédemment, le premier module de calcul 64 est propre à sélectivement exclure les points qui sont situés dans les zones ou niveaux de vol interdits 24, dans les zones 28 de phénomènes météorologiques dangereux et/ou dans les zones de turbulences 30. Au contraire, le premier module de calcul 64 est propre à exclure également les points qui ne seraient pas situés dans une zone de couverture satellite 32.

Le premier module de calcul 64 est ensuite propre à définir une trajectoire optimale 64A en choisissant sur des courbes d'iso-coût étendues successives des points successifs de la trajectoire optimale 64A.

Dans encore une autre variante de tous les modes de réalisation précédemment décrits, les courbes d'iso-déplacement ne sont pas déterminées à une vitesse air donnée, mais suivant un profil déterminé de vitesse air, par exemple en fonction de l'altitude ou encore à poussée maximale.

## Revendications

1. Système (10) de calcul de mission d'un aéronef, comportant un moteur de calcul (40) de trajectoires de l'aéronef lors de la mission, le moteur de calcul (40) comprenant :

    - un premier module de calcul (64) de trajectoires, propre à calculer une trajectoire optimale de mission (64A) entre un point géographique d'origine (18) et un point géographique de destination (20), en fonction de performances avion, de spécifications opérationnelles de mission et d'un contexte météorologique, de préférence évolutif, dans un volume de mission entre le point géographique d'origine (18) et le point géographique de destination (20) ;
    le premier module de calcul (64) de trajectoire étant propre à calculer une pluralité de courbes d'iso-déplacement (79, 80, 81) depuis le point géographique d'origine (18) vers le point géographique de destination (20), et à calculer la trajectoire à partir de points situés sur les courbes d'iso-déplacement (79, 80, 81) ;

- un afficheur (44), et un gestionnaire d'affichage (44A) sur l'afficheur (44), propre à afficher la trajectoire calculée sur l'afficheur (44) ;

**caractérisé en ce que** le moteur de calcul (40) comporte un module de détermination (67) d'un niveau de risque de perte d'optimalité de la trajectoire réellement suivie par l'aéronef, associé à une modification de trajectoire de l'aéronef par rapport à la trajectoire calculée, le gestionnaire d'affichage (44A) étant propre à afficher sur l'afficheur (44), en complément de la trajectoire calculée, un indicateur du niveau de risque déterminé.

**2.** Système (10) selon la revendication 1, dans lequel le niveau de risque est déterminé pour une pluralité de points de la trajectoire calculée, le gestionnaire d'affichage (44A) étant propre à afficher un indicateur de niveau de risque correspondant à plusieurs points de la trajectoire calculée.

**3.** Système (10) selon une quelconque des revendications précédentes, dans lequel le module de détermination (67) du niveau de risque est propre à déterminer une chaussette (200) autour de la trajectoire calculée, la chaussette (200) contenant la trajectoire calculée, le niveau de risque étant donné par la distance entre la trajectoire calculée et les bords (202A, 202B ; 209A, 209B) de la chaussette (200), le gestionnaire d'affichage (44A) étant propre à afficher un indicateur de niveau de risque formé par au moins les bords (202A, 202B ; 209A, 209B) de la chaussette (200).

**4.** Système (10) selon la revendication 3, dans lequel le module de détermination (67) du niveau de risque est propre à déterminer la chaussette (200) en projection dans un plan horizontal, le niveau de risque étant donné par la distance transversale entre la trajectoire calculée et les bords latéraux (202A, 202B) de la chaussette (200).

**5.** Système (10) selon la revendication 3 ou 4, dans lequel le module de détermination (67) du niveau de risque est propre à déterminer la chaussette (200) en projection dans un plan vertical, le niveau de risque étant défini par la distance entre la trajectoire et les bords supérieur et inférieur (209A, 209B) de la chaussette (200).

**6.** Système (10) selon une quelconque des revendications précédentes, **caractérisé en ce que** le module de détermination (67) du niveau de risque est propre à déterminer le niveau de risque en calculant, à partir de la trajectoire calculée, des courbes d'iso-déplacement inverses (204 ; 218) depuis le point géographique de destination (20) vers le point géographique d'origine (18), puis en déterminant l'intersection (208A, 208B ; 220A, 220B) entre au moins une courbe d'iso-déplacement (79, 80, 81 ; 210, 212, 214) et au moins une courbe d'iso-déplacement inverse (204 ; 218).

**7.** Système (10) selon la revendication 6, dans lequel lorsque la courbe d'iso-déplacement (79, 80, 81 ; 210, 212, 214) contenant un point de la trajectoire calculée est obtenue après un nombre N1 d'incréments de déplacement, la courbe d'iso-déplacement inverse (204 ; 218) utilisée par le module de détermination (67) pour obtenir l'intersection (208A, 208B ; 220A, 220B) est celle correspondant à un nombre N2 d'incréments de déplacement calculé par l'éuation :

$$N2 = N - N1 + 1$$

où N est le nombre total d'incréments de déplacement nécessaires pour joindre le point géographique d'origine (18) au point géographique de destination (20) suivant la trajectoire calculée.

**8.** Système (10) selon l'une des revendications 6 ou 7, prise en combinaison avec la revendication 5, dans lequel les courbes d'iso-déplacement et les courbes d'iso-déplacement inverses sont respectivement des courbes d'iso-déplacement verticales (210, 212, 214) et des courbes d'iso-déplacement verticales inverses (218) définies le long de la trajectoire calculée en projection dans un plan vertical en déterminant les points situés à un même incrément de déplacement d'au moins un point d'une courbe d'iso-déplacement verticale.

**9.** Système (10) selon l'une quelconque des revendications précédentes dans lequel chaque courbe d'iso-déplacement (79, 80, 81) est une courbe isochrone, le premier module de calcul (64) de trajectoire étant propre à calculer une trajectoire minimisant le temps entre le point géographique d'origine (18) et le point géographique de destination (20),

ou dans lequel chaque courbe d'iso-déplacement (79, 80, 81) est une courbe d'iso-consommation de carburant, le premier module de calcul (64) de trajectoire étant propre à calculer une trajectoire minimisant la consommation de carburant entre le point géographique d'origine (18) et le point géographique de destination (20), ou dans lequel chaque courbe d'iso-déplacement (79, 80, 81) est une courbe d'iso-coût, le coût étant défini comme une fonction du temps de parcours et du carburant consommé, le premier module de calcul (64) de trajectoire étant propre à calculer une trajectoire minimisant le coût entre le point géographique d'origine (18) et le point géographique de destination (20)

10. Système (10) selon l'une quelconque des revendications précédentes, dans lequel le premier module de calcul (64) de trajectoire est propre à calculer une pluralité de courbes d'iso-déplacement (79, 80, 81) à partir d'au moins un point choisi accessible à l'aéronef, à un intervalle de déplacement correspondant à plusieurs incréments de déplacement successifs de l'aéronef depuis le point choisi, les courbes d'iso-déplacement (79, 80, 81) étant obtenues à l'intervalle de déplacement pour un déplacement de l'aéronef jusqu'à un niveau de vol donné à partir de déplacements de l'aéronef à des paliers de vol distincts, et à déterminer, sur la base des courbes d'iso-déplacement (79, 80, 81) jusqu'au niveau de vol donné, obtenues à des paliers de vol distincts, prises au même intervalle de déplacement de l'aéronef, au moins une courbe d'iso-déplacement étendue (83) au niveau de vol donné maximisant le déplacement de l'aéronef à partir du point géographique d'origine (18) ou minimisant le déplacement de l'aéronef vers le point géographique de destination (20), le premier module de calcul (64) de trajectoire étant propre à définir la trajectoire calculée à partir d'une pluralité de segments de trajectoire (88A à 88D), chaque segment de trajectoire (88A à 88D) étant défini à un niveau de vol donné sur une pluralité de courbes d'iso-déplacement (79, 80, 81) au palier de vol correspondant au niveau de vol donné depuis une courbe d'iso-déplacement étendue (83) ou/et vers une courbe d'iso-déplacement étendue (83)

11. Procédé de calcul de mission d'un aéronef, mis en œuvre par système de de calcul de trajectoires (10) comportant un moteur de calcul (40) de trajectoires de l'aéronef lors de la mission, le procédé comprenant les étapes suivantes :

 - calcul par un premier module de calcul (64) de trajectoires du moteur de calcul (40), d'une trajectoire optimale de mission (64A) entre un point géographique d'origine (18) et un point géographique de destination (20), en fonction de performances avion, de spécifications opérationnelles de mission et d'un contexte météorologique, de préférence évolutif, dans un volume de mission entre le point géographique d'origine (18) et le point géographique de destination (20), le premier module de calcul (64) de trajectoire calculant une pluralité de courbes d'iso-déplacement (79, 80, 81) depuis le point géographique d'origine (18) vers le point géographique de destination (20), et calculant la trajectoire à partir de points situés sur les courbes d'iso-déplacement (79, 80, 81) ;
 - affichage de la trajectoire calculée sur un afficheur (44) du système de calcul de mission (10) par un gestionnaire d'affichage (44A) sur l'afficheur (44) ;
 - détermination par un module de détermination (67) du moteur de calcul (40) d'un niveau de risque de perte d'optimalité de la trajectoire réellement suivie par l'aéronef, associé à une modification de trajectoire de l'aéronef par rapport à la trajectoire calculée, le gestionnaire d'affichage (44A) affichant sur l'afficheur (44), en complément de la trajectoire calculée, un indicateur du niveau de risque déterminé.

12. Procédé selon la revendication 11, comprenant la détermination, par le module de détermination (67) du niveau de risque, d'une chaussette (200) autour de la trajectoire calculée, la chaussette (200) contenant la trajectoire calculée, le niveau de risque étant donné par la distance entre la trajectoire calculée et les bords (202A, 202B ; 209A, 209B) de la chaussette (200), le gestionnaire d'affichage (44A) affichant un indicateur de niveau de risque formé par au moins les bords (202A, 202B ; 209A, 209B) de la chaussette (200).

13. Procédé selon la revendication 11 ou 12 dans lequel le module de détermination (67) détermine le niveau de risque en calculant, à partir de la trajectoire calculée, des courbes d'iso-déplacement inverses (204 ; 218) depuis le point géographique de destination (20) vers le point géographique d'origine (18), puis en déterminant l'intersection (208A, 208B ; 220A, 220B) entre au moins une courbe d'iso-déplacement (79, 80, 81 ; 210, 212, 214) et au moins une courbe d'iso-déplacement inverse (204 ; 218).

14. Procédé selon l'une des revendications 12 ou 13, dans lequel le module de détermination (67) du niveau de risque détermine la chaussette (200) en projection dans un plan horizontal, le niveau de risque étant donné par la distance transversale entre la trajectoire calculée et les bords latéraux (202A, 202B) de la chaussette (200) ou/et dans lequel le module de détermination (67) du niveau de risque détermine la chaussette (200) en projection dans un plan vertical, le niveau de risque étant défini par la distance entre la trajectoire et les bords supérieur et inférieur (209A, 209B) de la chaussette (200).

FIG.1

FIG.2

FIG.3

EP 4 166 907 A1

FIG.4

**FIG.5**

**FIG.6**

## FIG.7

**FIG.8**

FIG.9

EP 4 166 907 A1

**FIG.10**

Europäisches
Patentamt

European
Patent Office

Office européen
des brevets

**RAPPORT DE RECHERCHE EUROPEENNE**

Numéro de la demande

**EP 22 20 2262**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | EP 3 715 786 A1 (DASSAULT AVIAT [FR]) 30 septembre 2020 (2020-09-30) * abrégé * * figures 1-14 * * alinéas [0001] – [0018], [0040] – [0044] * * revendications 1-15 * ----- | 1-14 | INV. G01C21/20 G01C23/00 G08G5/00 |
| A | US 2018/010916 A1 (ROGER MICHEL [FR] ET AL) 11 janvier 2018 (2018-01-11) * abrégé * * figures 1-3, 5-8 * * alinéas [0002] – [0023] * * revendications 1-22 * ----- | 1-14 | |
| A | EP 1 273 987 A2 (BOEING CO [US]) 8 janvier 2003 (2003-01-08) * abrégé * * figures 5A, 5B, 11A-11C * * alinéas [0001] – [0014] * * revendications 1-20 * ----- | 1-14 | |

**DOMAINES TECHNIQUES RECHERCHES (IPC)**

G01C
G08G

Le présent rapport a été établi pour toutes les revendications

| Lieu de la recherche | Date d'achèvement de la recherche | Examinateur |
|---|---|---|
| La Haye | 16 février 2023 | Toth, Rémy |

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 22 20 2262

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-02-2023

| Document brevet cité au rapport de recherche | Date de publication | Membre(s) de la famille de brevet(s) | Date de publication |
|---|---|---|---|
| EP  3715786      A1 | 30-09-2020 | BR 102020005300 A2 | 29-09-2020 |
| | | CA       3076125 A1 | 18-09-2020 |
| | | EP       3715786 A1 | 30-09-2020 |
| | | FR       3094084 A1 | 25-09-2020 |
| | | US     2020302805 A1 | 24-09-2020 |
| US 2018010916    A1 | 11-01-2018 | CN       107591033 A | 16-01-2018 |
| | | EP       3267156 A1 | 10-01-2018 |
| | | FR       3053779 A1 | 12-01-2018 |
| | | US     2018010916 A1 | 11-01-2018 |
| EP  1273987      A2 | 08-01-2003 | DE       60222503 T2 | 12-06-2008 |
| | | EP       1273987 A2 | 08-01-2003 |
| | | US     2003004619 A1 | 02-01-2003 |

EPO FORM P0460

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- EP 3715786 A
- FR 1701234
- FR 1800734
- WO 1800734 A